# EUROPÄISCHE PATENTSCHRIFT

(11) **EP 1 708 804 B1**
(45) Veröffentlichungstag und Bekanntmachung des Hinweises auf die Patenterteilung: **18.11.2009**
(21) Anmeldenummer: 05701075.3
(22) Anmeldetag: 20.01.2005
(51) Int. Cl.: B01J 8/06

(54) **ROHRBÜNDELREAKTOR MIT EINEM HELIXFÖRMIG AUSGEBILDETEN QUERSCHNITT**
PIPE ASSEMBLY REACTOR COMPRISING A HELICALLY SHAPED CROSS SECTION
REACTEUR A FAISCEAU TUBULAIRE AYANT UNE SECTION TRANSVERSALE HELICOIDALE

(30) Priorität: 20.01.2004 DE 102004003003
(43) Veröffentlichungstag der Anmeldung: 11.10.2006
(73) Patentinhaber: BASF SE, 67056 Ludwigshafen (DE)
(72) Erfinder: GÖBBEL, Hans-Georg, 67169 Kallstadt (DE); BASSLER, Peter, 68519 Viernheim (DE); TELES, Joaquim Henrique, 67166 Otterstadt (DE); RUDOLF, Peter, 68526 Ladenburg (DE)
(74) Vertreter: Isenbruck, Günter
(86) Internationale Anmeldenummer: PCT/EP2005/000532
(87) Internationale Veröffentlichungsnummer: WO 2005/068062

(56) Entgegenhaltungen:
- DE-A1- 2 405 606
- US-A- 3 357 916

## Beschreibung

Die vorliegende Erfindung betrifft ein Verfahren zur kontinuierlichen Herstellung einer chemischen Verbindung, wobei in mindestens einem Reaktor, der zur Herstellung dieser Verbindung eingesetzt wird, ein speziell ausgebildeter Rohrbündelreaktor eingesetzt wird. Ebenso betrifft die vorliegende Erfindung auch eine Vorrichtung zur kontinuierlichen Herstellung einer chemischen Verbindung, wobei diese Vorrichtung, gegebenenfalls neben mindestens einer Abtrennvorrichtung, mindestens einen dieser speziell ausgebildeten Rohrbündelreaktoren aufweist.

Bei zahlreichen chemischen Verfahren, in denen mindestens eine Verbindung hergestellt wird, ist mindestens eine der Reaktionen, die von mindestens einem Edukt zu dieser Verbindung führt, exothermer Natur. Insbesondere bei Reaktionsführungen im Technikums- oder großtechnischen Maßstab ergibt sich damit das Problem, wie die im Laufe dieser Reaktion erzeugte Wärme schnell und effizient abgeführt werden kann.

Eine Bauform von chemischen Reaktoren, die insbesondere zu einer guten Wärmeabfuhr eingesetzt wird, ist der so genannte Rohrbündelreaktor. Bei diesen Reaktoren befinden sich im Inneren eines zylindrischen Mantels parallel angeordnete gerade innere Rohre, die in einem unteren und einem oberen Rohrboden eingeschweißt sind. Die inneren Rohre werden von der Reaktionslösung durchströmt, wobei bei Durchgang der Reaktionslösung aus einem Edukt, das in der einströmenden Reaktionslösung enthalten ist, ein Produkt hergestellt wird, das im Reaktoraustrag enthalten ist. Der Außenraum, der von den Rohrböden, der Innenseite des zylindrischen Mantels und den Außenseiten der inneren Rohre gebildet wird, wird im Regelfall von einem Kühlmedium durchströmt, das die während der Reaktion gebildete Wärme, die durch die Mäntel der inneren Rohre aus den inneren Rohren abgeführt wird, abtransportiert. Die Durchströmung der Rohrbündel erfolgt in den im Regelfall vertikal angeordneten Rohrbündelreaktoren in den meisten Fällten von unten nach oben. Die Durchströmung von oben nach unten ist jedoch auch denkbar.

Als ideal hat sich im Lauf der Zeit eine Queranströmung des Kühlmittels zu den inneren Rohren herausgestellt. In den bekannten Rohrbündelreaktoren wird dies durch den Einbau von Umlenkblechen zu einem bestimmten Anteil erreicht. Durch diese Umlenkbleche, die als Strömungsbrecher wirken, wird dem Kühlmedium eine mäandernde Strömungsrichtung durch den Außenraum aufgezwungen.

Ein Nachteil dieser verbreiteten Konstruktion ist die ungleichmäßige Verteilung der Strömung. Durch die Verwendung der Umlenkbleche werden einerseits Bereiche gebildet, in denen das Kühlmedium sehr schnell strömt und sehr gute Wärmeübertragungswerte erreicht werden können, und andererseits Bereiche gebildet, die Totzonen darstellen, in denen das Kühlmittel keine oder nur eine sehr langsame Strömung aufweist und die Wärmeübertragungswerte schlecht sind.

Solche Totzonen sind unter anderem deshalb nachteilig, weil bei ungenügender Abfuhr der Wärme in einzelnen Reaktorbereichen die dort auftretenden Temperaturen die Reaktion nachteilig beeinflussen können. Weiterhin ist zu erwähnen, dass Temperaturspitzen auftreten können, die aus sicherheitstechnischen Überlegungen heraus nicht akzeptierbar sind.

Eine Optimierung des Strörnungsverhaltens könnte beispielsweise durch eine Erhöhung der Zahl der Umlenkbleche erzielt werden. Dies führt jedoch zwangsläufig zu einer Erhöhung des Druckverlustes im Kühlmedium, was sich negativ auf die Förderleistung der Pumpen auswirkt, die im Normalfall dazu verwendet werden, das Kühlmedium durch den Außenraum strömen zu lassen.

Eine der der vorliegenden Erfindung zugrunde liegenden Aufgaben war es daher, ein Verfahren zur kontinuierlichen Herstellung einer chemischen Verbindung bereitzustellen, das diese Nachteile nicht aufweist

Demgemäß betrifft die vorliegende Erfindung ein Verfahren zur kontinuierlichen Herz stellung einer chemischen Verbindung in mindestens einem Reaktor, wobei mindestens einer der Reaktoren ein Rohrbündelreaktor ist, der einen äußeres Rohr als Mantel und mehrere in dem Mantel angeordnete innere Rohre aufweist, dadurch gekennzeichnet, dass mindestens eines der inneren Rohre in dem Bereich, in dem es von dem Mantel umgeben ist, zumindest teilweise einen nicht-kreisförmigen Querschnitt aufweist und helixförmig ausgebildet ist.

Der Begriff. "Rohrbündelreaktor", wie er im Rahmen der vorliegenden Erfindung verwendet wird, bezeichnet einen Reaktor, der mindestens einen Mantel beliebiger Geometrie aufweist, in dessen Inneren mehrere innere Rohre angeordnet sind.

Der Begriff "helixförmig ausgebildetes Rohr", wie er im Rahmen der vorliegenden Erfindung verwendet wird, bezeichnet ganz allgemein ein verdrilltes Rohr. Der Begriff "helixförmig ausgebildetes Rohr" umfasst demgemäß eine Ausführungsform, gemäß der die inneren Rohre mit dem nicht-kreisförmigen Querschnitt um mindestens eine lineare Achse verdrillt ist. Ebenso umfasst der Begriff eine Ausführungsform, gemäß der diese mindestens eine Achse zumindest abschnittsweise nicht-linear ist. Demgemäß umfasst der Begriff auch eine Ausführungsform, gemäß der das um eine lineare oder um eine zumindest abschnittsweise nicht-lineare Achse verdrillte Rohr um mindestens eine weitere lineare oder zumindest abschnittsweise nicht-lineare Achse gewunden ist.

Die vorliegende Erfindung umfasst weiter Ausführungsformen, gemäß denen die inneren Rohre im gesamten Bereich, in dem dieses von dem Mantel umgeben ist, einen nicht-kreisförmigen Querschnitt aufweist und helixförmig ausgebildet ist Dabei sind Ausführungsformen umfasst, gemäß denen die inneren Rohre einen einzigen Querschnitt oder zwei oder mehr voneinander verschiedene Querschnitte aufweisen. Unter dem Begriff "zwei verschiedene Querschnitte" werden im Rahmen der vorliegenden Erfindung Querschnitte verstanden, die gleiche Geometrie und unterschiedliche Flächen oder unterschiedliche Geometrien und gleiche oder unterschiedliche Flächen aufweisen.

Weist im Rahmen der vorliegenden Erfindung ein inneres, helixförmig ausgebildetes Rohr zwei oder mehr voneinander verschiedene Querschnitte auf, so können die Übergänge eines Rohrbereiches mit einem Querschnitt zum einem anderen Rohrbereich mit einem anderen Querschnitt kontinuierlich und damit kantenfrei oder diskontinuierlich ausgebildet sein. Bevorzugt werden diese Übergänge kontinuierlich ausgebildet, um beim Durchfluss einer Reaktionslösung keine Totzonen im Rohr zu erzeugen.

Die vorliegende Erfindung umfasst weiter Ausführungsformen, gemäß denen die inneren Rohre in mindestens einem Abschnitt, der von dem Mantel umgeben ist, nicht-kreisförmigen Querschnitt aufweisten und helixförmig ausgebildet sind und in mindestens einem anderen Abschnitt einen kreisförmigen Querschnitt oder einen nichtkreisförmigen Querschnitt aufweisen und nicht helixförmig ausgebildet sind. Dabei können der nicht-kreisförmige Querschnitt in dem mindestens einen nicht-helixförmig ausgebildeten Bereich und der nicht-kreisförmige Querschnitt in dem mindestens einen helixförmig ausgebildeten Bereich gleich oder verschieden voneinander sein.

Weiter umfasst die vorliegende Erfindung auch Ausführungsformen, gemäß denen die inneren Rohre zwei oder mehr voneinander verschiedene, helixförmig ausgebildete Abschnitte mit nicht-kreisförmigem Querschnitt aufweisen. Diese Abschnitte können entweder kontinuierlich oder diskontinuierlich, bevorzugt kontinuierlich ineinander übergehen oder durch mindestens einen Abschnitt mit nicht-helixförmig ausgebildetem kreisförmigen oder nicht-kreisförmigen Querschnitt voneinander getrennt sein, wobei die Übergänge kontinuierlich oder diskontinuierlich, bevorzugt kontinuierlich ausgebildet sind. Unter dem Begriff "voneinander verschiedene, helixförmig ausgebildete Abschnitte" werden im Rahmen der vorliegende Erfindung Abschnitte verstanden, die sich in der Rohrlänge, die in dem jeweiligen Abschnitt helixförmig ausgebildet ist, und/oder der Länge der mindestens einen Achse, um die das Rohr in dem jeweiligen Abschnitt verdrillt ist, und/oder in der mindestens einen Geometrie und/oder Fläche des jeweiligen nicht-kreisförmigen Querschnitts und/oder in der Anzahl der Helixwindungen und/oder in der Lage und/oder Anzahl der Achsen, um die das innere Rohr in dem jeweiligen Abschnitt verdrillt ist, unterscheiden.

Die vorliegende Erfindung umfasst Ausführungsformen, gemäß denen mindestens ein Rohr in mindestens einem Abschnitt nicht-kreisförmigen Querschnitt aufweist und helixförmig ausgebildet ist Demgemäß umfasst die vorliegende Erfindung eine Ausführungsform, gemäß der sämtliche in dem Mantel angeordneten inneren Rohre in jeweils mindestens einem Abschnitt nicht-kreisförmigen Querschnitt aufweisen und helixförmig ausgebildet sind, wobei in diesem Fall die inneren Rohre gleich oder verschieden voneinander sein können. Sind die Rohre verschieden voneinander, so können sie sich beispielsweise in der Anzahl der helixförmig und/oder nicht-helixförmig ausgebildeten Bereiche mit kreisförmigem oder nicht-kreisförmigem Querschnitt und/oder in der Länge des Rohrs in den helixförmig und/oder nicht-helixförmig ausgebildeten Bereichen und/oder in der Anzahl der Helixwindungen in den jeweiligen Abschnitten und/oder der Anordnung der helixförmig ausgebildeten Abschnitte relativ zum Mantel und/oder in den Querschnittsflächen der helixförmig und/oder nicht-helixförmig ausgebildeten Bereiche mit kreisförmigem oder nicht kreisförmigem Querschnitt oder in den Querschnittsgeometrien der helixförmig oder nicht-helixförmig ausgebildeten Bereiche mit nicht-kreisförmigem Querschnitt und/oder in der Lage und/oder Anzahl der Achsen, um die das innere Rohr in dem jeweiligen helixförmig ausgebildeten Abschnitt mit kreisförmigem oder nicht-kreisförmigem Querschnitt verdrillt ist, unterscheiden.

Ebenso umfasst die vorliegende Erfindung Ausführungsformen, gemäß denen mindestens ein Rohr in mindestens einem Abschnitt nicht-kreisförmigen Querschnitt aufweist und helixförmig ausgebildet ist und mindestens ein inneres Rohr in keinem Abschnitt helixförmig ausgebildet ist oder in jedem vorhandenen helixförmig ausgebildeten Bereich kreisförmigen Querschnitt aufweist.

Gemäß einer bevorzugten Ausführungsform der vorliegenden Erfindung weisen sämtliche in dem Mantel angeordneten inneren Rohre mindestens einen Abschnitt auf, der von dem Mantel umgeben ist und der helixförmig ausgebildet ist und einen nicht-kreisförmigen Querschnitt aufweist. Weiter bevorzugt sind sämtliche in dem Mantel angeordneten inneren Rohre in dem Bereich, in dem sie von dem Mantel umgeben sind, im wesentlichen vollständig helixförmig ausgebildet und weisen in dem helixförmig ausgebildeten Bereich nicht-kreisförmigen Querschnitt auf. Weiter bevorzugt weist ein inneres Rohr einen nicht-kreisförmigen Querschnitt auf, der im gesamten helixförmig ausgebildeten Bereich die gleiche Geometrie und die gleiche Fläche aufweist.

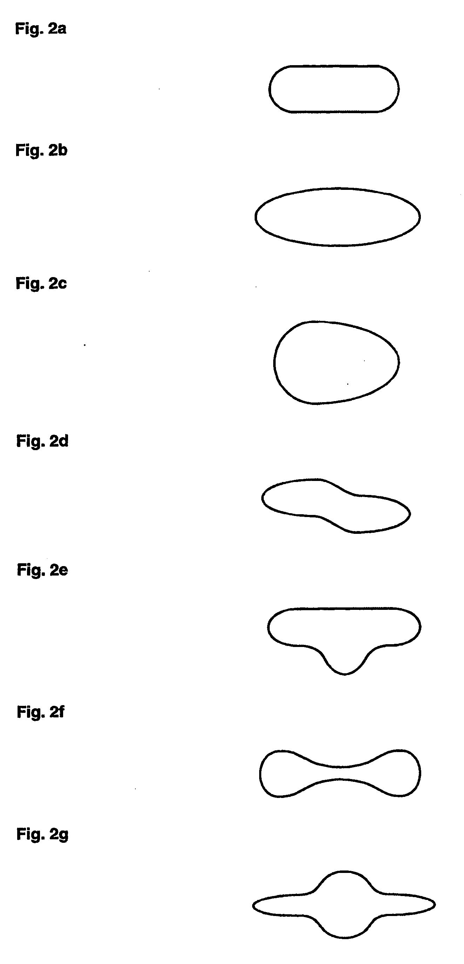

Hinsichtlich des nicht-kreisförmigen Querschnitts der helixförmig ausgebildeten Rohrbereiche sind grundsätzlich sämtliche geeigneten Geometrien möglich. Mögliche Querschnittsgeometrien sind beispielhaft in den Figuren 2a bis 2g gezeigt.

Besonders bevorzugt sind hierbei Querschnitte gemäß den Figuren 2a bis 2c.

Demgemäß betrifft die vorliegende Erfindung ein wie oben beschriebenes Verfahren, das dadurch gekennzeichnet ist, dass der nicht-kreisförmige Querschnitt sowohl gegenüber liegende gerade Seiten als auch gegenüber liegende runde Seiten aufweist oder die Form eines Ovals oder die Form einer Ellipse aufweist.

Im Falle, dass der Querschnitt sowohl gegenüber liegende gerade Seiten als auch gegenüber liegende runde Seiten aufweist wie dies beispielhaft in Figur 2a gezeigt ist, kann die Länge der geraden Seiten oder die Form der gegenüber liegenden runden Seiten oder die Querschnittsfläche grundsätzlich beliebig gewählt werden und insbesondere an die Anforderungen der Reaktion zur Herstellung der chemischen Verbindung angepasst werden. Diese grundsätzliche Freiheit hinsichtlich der genauen Ausgestaltung gilt ebenso für sämtliche weiteren denkbaren und insbesondere für die bevorzugten Querschnittsgeometrien und Querschnittsflächen, wie sie in den Figuren 2b bis 2g oder in den Figuren 2b und 2c beschrieben sind.

Während die Anzahl der Helixwindungen der inneren Rohre in dem Bereich, der von dem Mantel umgeben ist, grundsätzlich frei gewählt werden kann, sind Ausführungsformen bevorzugt, bei denen die Helix mit nicht-kreisförmigem Querschnitt in dem von dem Mantel umgebenen Bereich 1 bis 2000, weiter bevorzugt 1 bis 1000, weiter bevorzugt 1 bis 750, weiter bevorzugt 2 bis 500, weiter bevorzugt 5 bis 400, weiter bevorzugt 10 bis 300 und insbesondere 20 bis 250 vollständige Windungen aufweist.

Demgemäß betrifft die vorliegende Erfindung ein wie oben beschriebenes Verfahren, das dadurch gekennzeichnet, dass die Helix in dem von dem Mantel umgebenen Bereich 1 bis 2000 vollständige Windungen aufweist.

Wie bereits oben beschrieben, kann die Windungsdichte über die Rohrlänge gleich sein oder variieren. Besonders bevorzugt sind Ausführungsformen, gemäß denen die Windungsdichte eines inneren Rohres über die gesamte Helixtänge im Wesentlichen konstant ist.

Bei der Verwendung der helixförmig ausgebildeten inneren Rohre ist als Vorteil unter anderem auch zu erwähnen, dass ein verdrilltes Rohr die Möglichkeit hat, sich bei thermischer Belastung auszudehnen oder zusammenzuziehen. Diese Möglichkeit, In sich zu arbeiten und sich beispielsweise weiter zu verdrillen oder zu entspannen, besitzen gerade Rohre, die gemäß Stand der Technik in Rohrbündelreaktoren zur kontinuierlichen Herstellung einer chemischen Verbindung eingesetzt werden, nicht und sind demgemäß gegenüber den erfindungsgemäß eingesetzten verdrillten Rohren einem erhöhten Stress beziehungsweise einer größeren Spannung ausgesetzt.

Die Anzahl der inneren Rohre ist im Wesentlichen beliebig und kann beispielsweise der Art der chemischen Reaktion, den gewünschten Reaktionsparametem wie Temperatur und/oder Druck und/oder den gewünschten Umsätzen und/oder Selektivitäten angepasst werden.

Im allgemeinen werden Ausführungsformen bevorzugt, gemäß denen in dem Mantel 10 bis 10.000, bevorzugt 100 bis 8.000, weiter bevorzugt 1.000 bis 7.000 und insbesondere bevorzugt 3.000 bis 6.500 oder 3.000 bis 6.000 innere Rohre mit nicht-kreisförmigem Querschnitt in helixförmiger Ausbildung angeordnet sind.

Demgemäß betrifft die vorliegende Erfindung ein wie oben beschriebenes Verfahren, das dadurch gekennzeichnet ist, dass in dem Mantel 10 bis 10.000 innere Rohre mit nicht-kreisförmigem Querschnitt in helixförmiger Ausbildung angeordnet sind.

Besonders bevorzugt werden im Rahmen der vorliegenden Erfindung Ausführungsformen, gemäß denen sämtliche inneren Rohre gleich ausgebildet sind.

Grundsätzlich sind die Flächen der nicht-kreisförmigen Querschnitte der inneren Rohre in helixförmiger Ausbildung beliebig wählbar und beispielsweise der Art der chemischen Reaktion, den gewünschten Reaktionsparametem wie Temperatur und/oder Druck und/oder den gewünschten Umsätzen und/oder Selektivitäten anpassbar.

Im allgemeinen werden Ausführungsformen bevorzugt, gemäß denen die Querschnittsfläche der inneren Rohre im Bereich von 0,3 bis 100 cm², bevorzugt im Bereich von 2 bis 75 cm², weiter bevorzugt im Bereich von 3 bis 50 cm², weiter bevorzugt im Bereich von 4 bis 40 cm² und insbesondere bevorzugt im Bereich von 5 bis 35 cm² liegt, wobei weiter bevorzugt die Querschnittsfläche des mindestens einen inneren Rohres im Bereich von 5,7 bis 27 cm² liegt.

Unter dem Begriff "Querschnittsfläche", wie er im Rahmen der vorliegenden Erfindung verwendet wird, wird die freie Querschnittsfläche eines Rohres oder des Mantels verstanden, bei der die Wandstärke dieses Rohres oder des Mantels nicht mit berücksichtigt ist.

In Abhängigkeit von beispielsweise der Anzahl und der Querschnittsfläche der inneren Rohre sind Ausführungsformen bevorzugt, gemäß denen die Querschnittsfläche des Mantels im Bereich von 0,01 bis 115 m², bevorzugt im Bereich von 0,02 bis 75 m², weiter bevorzugt im Bereich von 0,07 bis 60 m², weiter bevorzugt im Bereich von 0,2 bis 50 m² und insbesondere bevorzugt im Bereich von 0,4 bis 45 m² liegt.

Demgemäß beschreibt die vorliegende Erfindung ein wie oben beschriebenes Verfahren, das dadurch gekennzeichnet ist, dass die Querschnittsfläche der inneren Rohre im Bereich von 0,3 bis 100 cm² und die Querschnittsfläche des Mantels im Bereich von 0,01 bis 115 m² liegt.

Das Verhältnis der Querschnittsfläche des Mantels zur Summe der Querschnittsflächen der inneren Rohre liegt bevorzugt im Bereich von 2,0 bis 3,0, weiter bevorzugt von 2,1 bis 2,9 und insbesondere bevorzugt von 2,2 bis 2,7.

Grundsätzlich ist die Länge des Mantels beliebig wählbar und beispielsweise besonders bevorzugt der Länge der Inneren Rohre anpassbar. Im Allgemeinen weist der Mantel eine Länge auf, die es erlaubt, dass sämtliche helixförmig ausgebildeten Bereiche der inneren Rohre vom Mantel umgeben sind. Ganz besonders bevorzugt weisen der Mantel und sämtliche inneren Rohre die gleiche Länge auf, die bevorzugt im Bereich von 1 bis 25 m, weiter bevorzugt im Bereich von 5 bis 20 m, weiter bevorzugt im Bereich von 6 bis 18 m und insbesondere bevorzugt im Bereich von 10 bis 14 m liegt.

Die inneren Rohre können grundsätzlich beliebig im Mantel angeordnet sein. Bevorzugt sind Ausführungsformen, gemäß denen die inneren Rohre im helixförmig ausgebildeten Bereich um eine lineare Achse verdrillt sind, wobei diese Achse weiter bevorzugt parallel zu der Seitenwand des Mantels verläuft Weiter bevorzugt sind sämtliche inneren Rohre jeweils um eine lineare Achse verdrillt, wobei besonders bevorzugt jede dieser linearen Achsen parallel zu der Seitenwand des Mantels verläuft.

Gemäß einer besonders bevorzugten Ausführungsform der vorliegenden Erfindung weist der Bereich, in dem die inneren Rohre von dem Mantel umgeben sind eine Länge im Bereich von 1 bis 25 m, weiter bevorzugt im Bereich von 5 bis 20 m, weiter bevorzugt im Bereich von 6 bis 18 m und insbesondere bevorzugt im Bereich von 10 bis 14 m auf.

Gemäß einer weiter bevorzugten Ausführungsform der vorliegenden Erfindung weist der bevorzugt zylinderförmige Mantel an den Stirnseiten jeweils einen Rohrboden auf, in den die inneren Rohre eingeschweißt sind.

Grundsätzlich können die inneren Rohre und der Mantel sowie die Rohrböden aus gleichen oder unterschiedlichen Materialien gefertigt sein. Die Materialien können hierbei beispielsweise an die gewünschten Wärmeleitfähigkeiten, die Reaktionen, die in den inneren Rohren ablaufen und/oder die chemische Natur der Heiz- oder Kühlmedien angepasst werden. Gemäß besonders bevorzugter Ausführungsformen werden als Materialien beispielsweise unlegierter Stahl wie beispielsweise Stahl 1.0425 und/oder Edelstähle wie beispielsweise Edelstahl 1.4301, Edelstahl 1.4306, Edelstahl 1.4.401, Edelstahl 1.4404, Edelstahl 1.4541 oder Edelstahl 1.4571 verwendet. Ganz besonders bevorzugt wird als Material Edelstahl 1.4541 verwendet.

Die mindestens eine Öffnung des Rohrbodens, durch die das Reaktionsmedium in die inneren Rohre zugeführt wird, kann grundsätzlich jede beliebige Geometrie aufweisen. Beispielsweise bevorzugt weist diese mindestens eine Öffnung einen Querschnitt auf, der dem nicht-kreisförmigen Querschnitt des helixförmig ausgebildeten Bereichs der inneren Rohre entspricht. Insbesondere bevorzugt weist diese mindestens eine Öffnung einen kreisförmigen Querschnitt auf. An diesen kreisförmigen Querschitt kann sich unmittelbar der mindestens eine helixförmig ausgebildete Bereich der inneren Rohre mit nicht-kreisförmigem Querschnitt anschließen, wobei der Übergang von dem kreisförmigen Querschnitt zu dem nicht-kreisförmigen Querschnitt kontinuierlich, also ecken- und kantenfrei, oder diskontinuierlich ausgebildet sein kann. Besonders bevorzugt ist der Übergang kontinuierlich ausgebildet Besonders bevorzugt ist im Rahmen der vorliegenden Erfindung eine Ausführungsform, gemäß der sich an die kreisförmige Öffnung ein Abschnitt der inneren Rohre anschließt, der ebenfalls diesen kreisförmigen Querschnitt aufweist und der nicht-helixförmig ausgebildet ist Nach diesem Abschnitt der inneren Rohre erfolgt ein kontinuierlicher oder diskontinulerlicher, bevorzugt kontinuierlicher Übergang des kreisförmigen Querschnitts zu dem erfindungsgemäßen nicht-kreisförmigen Querschnitt, wobei der helixförmig ausgebildete Bereich der inneren Rohre sich unmittelbar an den nicht-helixförmigen Abschnitt mit kreisförmigem Querschnitt oder sich an einen nicht-helixförmigen Abschnitt mit dem nicht-kreisförmigem Querschnitt anschließt.

Die vorstehend beschriebenen inneren Rohre können grundsätzlich beliebig angeordnet sein. Demgemäß ist es beispielsweise möglich, dass die inneren Rohre von der Reaktionslösung vertikal von unten nach oben oder vertikal von oben nach unten durchströmt werden. Ebenso ist es möglich, dass die inneren Rohre nicht-vertikal, also beispielsweise horizontal angeordnet sind. Ebenso sind schräge Anordnungen möglich, wobei im Falle dieser schrägen Anordnung die inneren Rohre von der Reaktionslösung von unten nach oben oder von oben nach unten durchströmt werden können. Besonders bevorzugt sind Ausführungsformen, gemäß denen der Reaktor und damit die inneren Rohre vertikal angeordnet sind und die Rohre von oben nach unten oder von unten nach oben durchströmt werden oder gemäß denen der Reaktor und damit die inneren Rohre liegend angeordnet sind und die inneren Rohre von hinten nach vorne oder von vorne nach hinten durchströmt werden.

Gemäß einer bevorzugten Ausführungsform sind die inneren Rohre vertikal angeordnet, wobei weiter bevorzugt die inneren Rohre von unten nach oben von der Reaktionslösung durchströmt werden.

Gemäß einer insbesondere bevorzugten Ausführungsform wird der Mantelraum, der durch die Außenseiten der Inneren Rohre und der Innenseite des Mantels und die Rohrböden begrenzt wird, von mindestens einem Kühlmedium oder Heizmedium durchströmt Der Durchfluss dieses Mediums durch den Mantelraum kann hierbei im Gleichstrom oder im Gegenstrom zur Reaktionslösung erfolgen. Im Rahmen dieser Hauptstromrichtung erfolgt ganz besonders bevorzugt das Anströmen der inneren Rohre durch das Medium in Form einer Queranströmung.

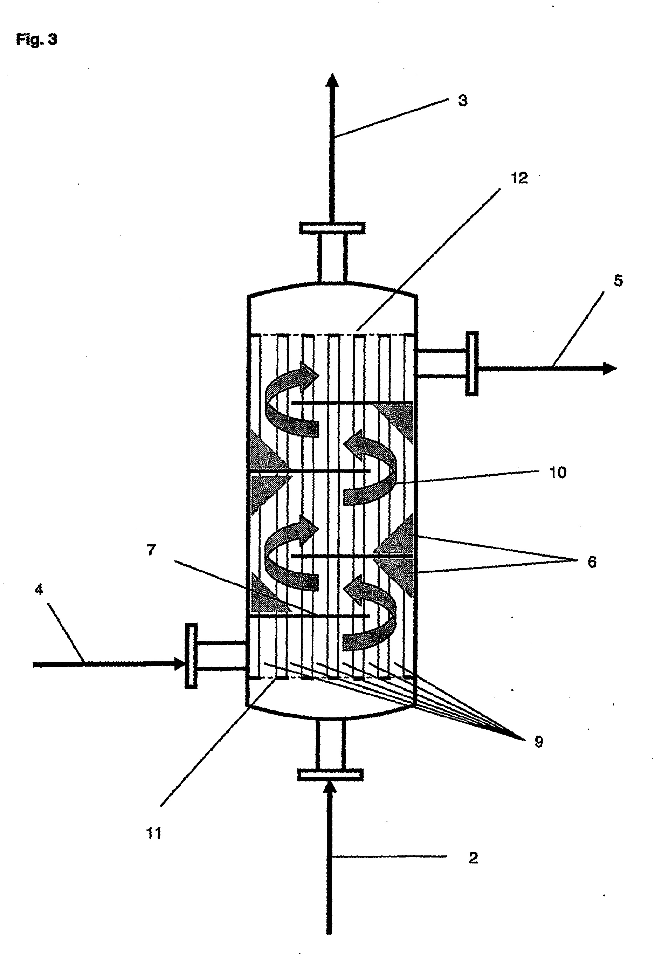

Diese Queranströmung wird in den Verfahren zur kontinuierlichen Herstellung einer chemischen Verbindung, die aus dem Stand der Technik bekannt sind, grundsätzlich über den Einbau von so genannten Umlenkblechen realisiert. Durch diese Umlenkbleche, durch die diese Queranströmung zu einem bestimmten Teil realisiert werden kann, wird dem Kühlmedium oder dem Heizmedium eine mäandernde Strömungsrichtung aufgezwungen. Dies ist bereits oben beschrieben und beispielhaft in Figur 3 dargestellt.

Durch die erfindungsgemäß eingesetzten inneren Rohre des Reaktors, die zumindest abschnittsweise nicht-kreisförmigen Querschnitt aufweisen und in diesem mindestens einen Abschnitt helixförmig ausgebildet sind, ist es nun möglich, diese Queranströmung ohne den Einsatz von Umlenkblechen oder mit einer im Vergleich zum Stand der Technik stark reduzierten Anzahl an Umlenkblechen und somit unter Verzicht oder unter weitgehendem Verzicht auf zusätzliche Bauteile im Reaktor zu realisieren. Hinzu kommt als weiterer entscheidender Vorteil, dass bei der Verwendung der erfindungsgemäßen helixförmig ausgebildeten inneren Rohre statt der Verwendung von geraden inneren Rohren mit zusätzlichen Umlenkblechen keine inhomogenen Strömungen mehr auftreten. Dadurch wird das oben beschriebene zwangsläufige Auftreten von Totzonen eliminiert. Eine direkte Folge dieser Eliminierung der Totzonen in den erfindungsgemäßen Reaktoren ist, dass durch die gleichmäßige Verteilung der Strömung in den inneren Rohren auch die Wärmeabfuhr gleichmäßig verteilt ist und so die Reaktionswärme gleichmäßig aus dem Rohr abgeführt werden kann. Die unerwünschten lokalen Temperaturspitzem, die so genannten Hot Spots, können daher durch das erfindungsgemäße Verfahren durch Einsatz der erfindungsgemäßen Reaktoren im Vergleich mit den Verfahren und Reaktoren des Standes der Technik vermieden werden. Überraschend wurde dabei gefunden, dass durch das erfindungsgemäße Verfahren und den Einsatz eines erfindungsgemäßen Reaktors gegenüber den aus dem Stand der Technik bekannten chemischen Reaktoren mit geraden Rohren und einer Vielzahl von Umlenkblechen Selektivitätsverbesserungen bei der in dem mindestens einen inneren Rohr ablaufenden Reaktion erzielt werden. Je nach Reaktion sind hierbei Selektivitätsverbesserungen bis zu 10 oder bis zu 20 % möglich.

Daher beschreibt die vorliegende Erfindung auch die Verwendung eines wie oben beschriebenen Reaktors zur Selektivitätsverbesserung bei der Herstellung einer chemischen Verbindung.

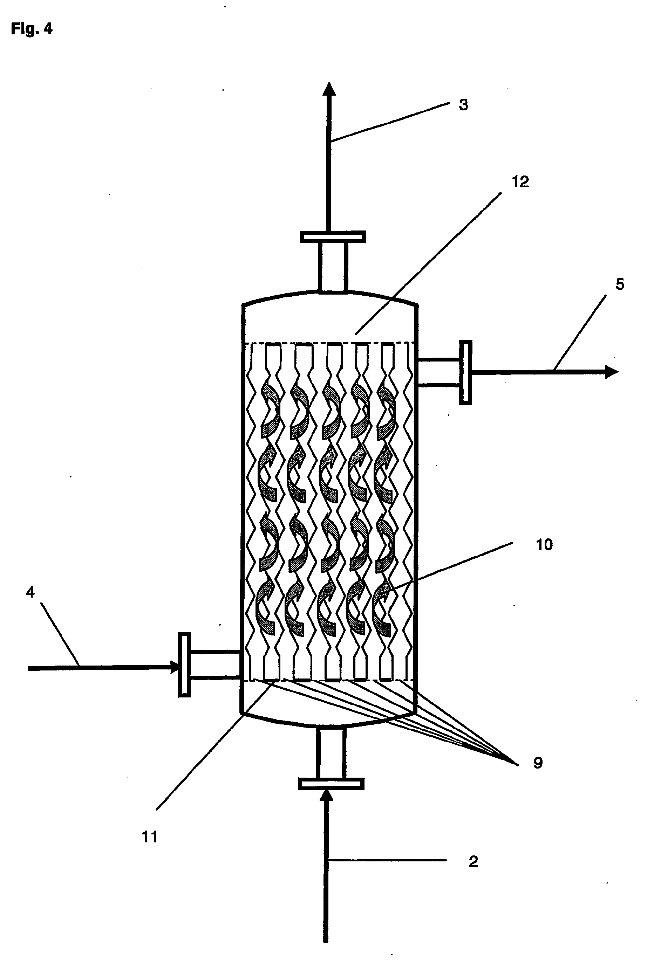

Das Prinzip des erfindungsgemäßen Reaktors zur kontinuierlichen Herstellung einer chemischen Verbindung ist in Figur 4 dargestellt.

Während in einem typischen Reaktor, der beispielsweise gemäß dem bekannten Stand der Technik für die kontinuierliche Epoxidation eines Olefins wie beispielsweise bevorzugt die Epoxidation von Propen eingesetzt wird, im allgemeinen mindestens 5 Umlenkbleche eingebaut werden müssen, um die erwünschte Queranströmung zu erreichen, werden erfindungsgemäß höchstens 3, bevorzugt beispielsweise kein Umlenkblech oder 1 bis 3 Umlenkbleche wie beispielsweise 1 Umlenkblech oder 2 Umlenkbleche oder 3 Umlenkbleche benötigt.

Demgemäß beschreibt die vorliegende Erfindung ein wie oben beschriebenes Verfahren, das dadurch gekennzeichnet, dass in dem mindestens einen Rohrbündelreaktor höchstens 3 Umlenkbleche wie beispielsweise kein Umlenkblech oder 1 bis 3 Umlenkbleche enthalten sind.

Wie bereits obenstehend beschrieben, kann der Außenraum von mindestens einem Kühlmedium oder mindestens einem Heizmedium durchströmt werden, je nachdem, ob im Laufe der Reaktion, die in den inneren Rohren abläuft, Wärme zugeführt oder abgeführt werden soll. Grundsätzlich ist es im Rahmen der vorliegenden Erfindung möglich, in mindestens einem inneren Rohr eine endotherme Reaktion durchzuführen und mindestens einem weiteren inneren Rohr eine exotherme Reaktion durchzuführen, wobei in einem solchen Fall beispielsweise der Außenraum von mindestens einem Wärmeübertragungsmedium durchströmt wird, das die in dem mindestens einen inneren Rohr entstehenden Wärme auf das mindestens eine andere innere Rohr überträgt. Ebenso umfasst die vorliegende Erfindung Ausführungsformen des kontinuierlichen Verfahrens, wobei in mindestens einem inneren Rohr eine erste endotherme Reaktion und in mindestens einem zweiten inneren Rohr eine zweite endotherme Reaktion durchgeführt wird und der Außenraum von mindestens einem Heizmedium durchströmt wird. Ebenso umfasst die vorliegende Erfindung Ausführungsformmen des kontinuierlichen Verfahrens, wobei in mindestens einem inneren Rohr eine erste exotherme Reaktion und in mindestens einem zweiten inneren Rohr eine zweite exotherme Reaktion durchgeführt wird und der Außenraum von mindestens einem Kühlmedium durchströmt wird.

Als mögliche Kühlmedien sind unter anderem etwa zu nennen:
Flusswasser, Brackwasser und/oder Seewasser, die jeweils beispielsweise bevorzugt einem der chemischen Anlage, in der der erfindungsgemäße Reaktor und das erfindungsgemäße Verfahren eingesetzt werden, nahe gelegenen Fluss und/oder See und/oder Meer entnommen werden und nach einer gegebenenfalls erforderlichen geeigneten Abtrennung von Schwebstoffen durch Filtration und/oder Sedimentation direkt ohne weitere Behandlung zur Kühlung des Reaktors eingesetzt werden können.

Besonders geeignet für Kühlzwecke ist Sekundärkühlwasser, das bevorzugt in einem geschlossenen Kreis geführt wird. Es handelt sich bei diesem Sekundärkühlwasser in der Regel um im Wesentlichen voll entsalztes Wasser, dem weiter bevorzugt mindestens ein Anti-Fouling-Mittel zugegeben wurde. Weiter bevorzugt kreist dieses Sekundärkühlwadser zwischen dem erfindungsgemäßen Reaktor und beispielsweise einem Kühlturm. Ebenfalls bevorzugt wird das Sekundärkühlwasser beispielsweise in mindestens einem Gegenstromwärmetauscher mit beispielsweise Flusswasser, Brackwasser und/oder Seewasser gegengekühlt.

Weiterhin ist es im Rahmen der vorliegenden Erfindung möglich, im Falle, dass die in den inneren Rohren des Reaktors ablaufende Reaktion eine exotherme Reaktion ist, im Mantelraum durch Siedekühlung von Wasser wie besonders bevorzugt von im Wesentlichen voll entsalztem Wasser hochgespannten Dampf wie beispielsweise Dampf unter einem Druck von mindestens 40 bar wie beispielsweise im Bereich von 40 bis 100 bar oder 50 bar bis 100 bar oder 60 bar bis 100 bar oder 70 bar bis 100 bar zu erzeugen. In einem solchen Fall ist es im Rahmen der vorliegenden Erfindung besonders bevorzugt, Kühlwasser in den Mantelraum zu pumpen, wobei die Wärmeabfuhr durch die Verdampfung des Wassers im Mantelraum erfolgt.

Zur Kühlung bei hohen Temperaturen wie beispielsweise im Bereich von 100 bis 300 °C können als Kühlmedium Öl wie beispielsweise Malothermöl oder bei hohen Temperaturen wie beispielsweise im Bereich von 300 bis 500 °C eine Salzschmelze wie beispielsweise ein eutektisches Gemisch aus Natriumnitrit und Kaliumnitrat verwendet werden.

Als mögliche Heizmedien sind unter anderem etwa zu nennen:
- Wasser mit einer ausreichend hohen Temperatur;
- Dampf wie beispielsweise bevorzugt Wasserdampf unter einem Druck im Bereich von bevorzugt 4 bis 70 bar oder 4 bis 40 bar;
- Öle wie beispielsweise Malothermöl,
- Salzschmelzen;
- Heiße Luft, die beispielsweise bevorzugt mittels mindestens eines Elektroerhitzers oder indirekt über Erdgasverbrennung erzeugt wird;
- Rauchgas. Im Rahmen dieser Ausführungsform wird der erfindungsgemäße Reaktor direkt mit dem Abgas aus der Verbrennung einer oder mehrerer organischer Verbindungen wie beispielsweise Erdgas beheizt. Ebenso ist es beispielsweise denkbar, mindestens ein geeignetes Nebenprodukt eines Verfahrens, in dem der erfindungsgemäße Reaktor oder das erfindungsgemäße Verfahren eingesetzt wird, zu verbrennen und mit diesem Abgas den Reaktor zu beheizen, um damit diesbezüglich ein integriertes Verfahren zu realisieren;
- Knallgas, wobei in diesem Fall der erfindungsgemäße Reaktor mit dem Abgas der Umsetzung von Wasserstoff und Sauerstoff direkt beheizt wird.

Bevorzugt werden als Kühlmedium Sekundärkühlwasser und als Heizmedium Heißluft eingesetzt.

Gemäß einer weiteren Ausführungsform des erfindungsgemäßen Verfahrens wird der Mantelraum von einer Reaktionslösung durchströmt und mindestens eines der inneren Rohre, bevorzugt sämtliche inneren Rohre von mindestens einem Kühlmedium und/oder mindestens einem Heizmedium durchströmt. Sollte dies im Rahmen der gewählten Umsetzung beim Durchgang der Reaktionslösung durch den Mantelraum erforderlich sein, kann ein Teil der inneren Rohre von mindestens einem Kühlmedium und ein Teil der inneren Rohre von mindestens einem Heizmedium durchströmt werden.

Gemäß einer untenstehend ausführlich beschriebenen Ausführungsform der vorliegenden Erfindung, gemäß der in dem erfindungsgemäßen Rohrbündelreaktor ein Olefin zu einem Epoxid, bevorzugt ein Olefin mit einem Hydroperoxid, zu einem Epoxid, weiter bevorzugt Propen mit einem Hydroperoxid zu Propylenoxid und insbesondere bevorzugt Propen mit Wasserstoffperoxid zu Propylenoxid umgesetzt wird, wird Sekundärkühlwasser durch den Mantelraum geleitet, das bei Eintritt in den Mantelraum eine Temperatur im Bereich von bevorzugt 20 bis 70 °C, weiter bevorzugt 25 bis 65 °C und insbesondere bevorzugt von 30 bis 60 °C aufweist.

Gemäß einer bevorzugten Ausführungsform des erfindungsgemäßen Verfahrens wird eine Reaktionslösung parallel durch sämtliche inneren Rohre geführt und der Außenraum wird von mindestens einem Heizmedium oder mindestens einem Kühlmedium durchströmt. Ganz besonders bevorzugt wird der erfindungsgemäße Reaktor dazu verwendet, eine exotherme Reaktion durchzuführen, wobei der Außenraum von mindestens einem Kühlmedium durchströmt wird.

Weiter bevorzugt kann im Rahmen der vorliegenden Erfindung die Anzahl der Helixwindungen In den Rohrbereichen an die Reaktion angepasst werden, die im Reaktor abläuft. Treten beispielsweise beim Durchfluss des Reaktionsmediums durch die inneren Rohre in einem oder mehreren Reaktorbereichen höhere Temperaturen auf als in anderen Reaktorbereichen, so können in diesen Bereichen höherer Temperatur die Anzahl der Helixwindungen der inneren Rohre vergrößert und somit die Verdrillung des Rohrs verstärkt werden, um eine bessere Abfuhr der Reaktionswärme über das mindestens eine, den Mantelraum bevorzugt durchströmende Kühlmedium zu ermöglichen.

Dies kann beispielsweise dann erforderlich sein, wenn gemäß einer unter anderem bevorzugten Ausführungsform der vorliegenden Erfindung die kontinuierliche Herstellung der chemischen Verbindung in Anwesenheit eines Katalysators erfolgt, der in den inneren Rohren als Festbettreaktor angeordnet ist und beispielsweise strukturiert geschüttet ist. Gemäß dieser Ausführungsform wird beispielsweise eine erste Zone der inneren Rohre durch Schüttung mit einem ersten Katalysator ausgestattet, wodurch das erste Katalysator-Kompartiment hergestellt wird. Anschließend wird eine zweite Zone der inneren Rohre durch Aufschütten eines zweiten, vom ersten verschiedenen Katalysators auf das erste Kompartiment unter Ausbildung des zweiten Kompartiments hergestellt. Ebenso können auch ein drittes Kompartiment oder weitere Kompartimente hinzugefügt werden, wobei im dritten oder einem weiteren Kompartiment jeweils einer der beiden ersten oder ein von den ersten beiden Katalysatoren verschiedener Katalysator verwendet werden kann. Diese Art der Herstellung wird im Rahmen der vorliegenden Erfindung als "strukturierte Schüttung" bezeichnet.

Gemäß einer weiteren Ausführungsform können zwei oder mehr voneinander verschiedene Katalysatoren in den inneren Rohren dadurch voneinander räumlich getrennt sein, dass zwei oder mehr unterschiedliche Zonen des der inneren Rohre mit jeweils unterschiedlichen Zeolith-Katalysatoren ausgestattet werden und die unterschiedlichen Zonen zur räumlichen Trennung der unterschiedlichen Zeolith-Katalysatoren durch jeweils mindestens eine mechanische Trennvorrichtung voneinander getrennt sein. Zwischen zwei Zonen können demgemäß eine oder mehr gleiche oder voneinander verschiedene mechanische Trennvorrichtungen vorgesehen werden. Bei drei oder mehr Zonen können zur Trennung der verschiedenen Zonen jeweils die gleichen oder jeweils verschiedene Trennvorrichtungen vorgesehen werden. Als mechanische Trennvorrichtungen sind beispielsweise Siebböden wie beispielsweise Siebbödenbleche oder Siebbödennetze oder beispielsweise in Destillationskolonnen verwendete Packungen oder Füllkörpergestricke zu nennen, die gemäß einer besonders bevorzugten Ausführungsform des erfindungsgemäßen Verfahrens dann eingesetzt werden, wenn die Katalysatoren als Formkörper eingesetzt werden. Werden demgemäß beispielsweise in einer ersten Zone Katalysator-Formkörper einer ersten Geometrie, in einer zweiten Zone Katalysator-Formkörper einer zweiten Geometrie und in einer dritten Zone Katalysator-Formkörper einer dritten Geometrie eingesetzt, so können sich die zur Abtrennung der Zonen beispielsweise bevorzugt eingesetzten Siebböden in der Maschenweite unterscheiden, die der Geometrie der jeweiligen Formkörper angepasst werden kann. Ebenso können sich auch die Materialien, aus denen die mechanischen Trennvorrichtungen gefertigt sind, voneinander unterschieden. Demgemäß beschreibt die vorliegende Erfindung auch ein Verfahren, wie oben beschrieben, das dadurch gekennzeichnet ist, dass die voneinander verschiedenen Katalysatoren durch mindestens eine mechanische Trennvorrichtung räumlich voneinander getrennt sind.

Diese strukturierte Schüttung oder die gemäß der weiteren Ausführungsform beschriebene räumliche Trennung bietet, wie auch untenstehend am Beispiel konkreter Katalysatoren beschrieben, unter anderem im Vergleich zu herkömmlichen Verfahren, bei denen ein Reaktor mit nur einem einzigen Katalysator ausgestattet wird, den Vorteil, dass sich durch die gezielte Auswahl und damit Abfolge der Katalysatoren, die in verschiedenen Reaktorzonen eingesetzt werden, beispielsweise der Reaktionsumsatz positiv beeinflussen lässt. Beispielsweise können bei der erfindungsgemäßen kontinuierlichen Reaktionsführung die einzelnen Katalysatoren dem Reaktionsfortschritt angepasst werden.

Der Mantel, in dem die inneren Rohre angeordnet sind, kann grundsätzlich jede Geometrie aufweisen. Demgemäß ist es im Rahmen der vorliegenden Erfindung möglich, den Mantel der Geometrie der inneren Rohre anzupassen. Im Rahmen einer besonders bevorzugten Ausführungsform der vorliegenden Erfindung wird der von dem Mantel umschlossene Raum, in dem die helixförmig ausgebildeten inneren Rohre angeordnet sind, von mindestens einem Kühlmedium oder mindestens einem Heizmedium, besonders bevorzugt von mindestens einem Kühlmedium durchströmt. In diesen bevorzugten Ausführungsformen kann die Geometrie des Mantels so gewählt werden, dass der gewünschte Kühlmediumstrom hinsichtlich Durchflussgeschwindigkeit und/oder Durchflussmenge erreicht wird. Im Allgemeinen bevorzugt wird erfindungsgemäß eine Ausführungsform, gemäß der der Mantel so eng um beispielsweise den äußeren Rohrkreis der inneren Rohre gelegt wird, dass die Strömungsgeschwindigkeit des Kühlmediums oder Heizmediums in einem Bereich liegt, der den gewünschten Wärmeübergang ermöglicht.

Bevorzugt weist der Mantel einen Querschnitt auf, der an der den inneren Rohren zugewandten Seite keine Ecken und/oder Kanten aufweist. Besonders bevorzugt weist der Querschnitt des Mantels an der den inneren Rohren zugewandten Seite Kreisform auf.

Gemäß einer weiter bevorzugten Ausführungsform der vorliegenden Erfindung weist der Mantelraum, in dem die helixförmig ausgebildeten inneren Rohre angeordnet sind, Zylindergeometrie auf.

Die Zufuhr des mindestens einen Kühlmediums oder des mindestens einen Heizmediums in den Außenraum des erfindungsgemäßen Rohrbündetreaktors kann grundsätzlich an die erwünschte Strömungsrichtung der Medien angepasst werden. Sind beispielsweise gemäß einer bevorzugten Ausführungsform die inneren Rohre und der Mantel vertikal angeordnet, so kann das mindestens eine Medium je nach erwünschter Strömungsrichtung entweder im oberen Reaktorbereich oder im unteren Reaktorbereich in den Außenraum zugeführt werden und im unteren oder im oberen Reaktorbereich aus dem Außenraum abgeführt werden. Gemäß einer insbesondere bevorzugten Ausführungsform, gemäß der die inneren Rohre und der Mantel vertikal angeordnet sind und die Reaktionslösung von unten nach oben durch die inneren Rohre geführt wird, wird das mindestens eine Kühlmedium oder das mindestens eine Heizmedium im unteren Reaktorbereich in den Außenraum zugeführt und im oberen Reaktorbereich aus dem Außenraum abgeführt. Diese bevorzugte Ausführungsform ist schematisch in Figur 4 dargestellt.

Im Rahmen der vorliegenden Erfindung ist es auch möglich, das Kühlmedium oder das Heizmedium beispielsweise in etwa in der Mitte des Reaktors zuzuführen und sowohl im unteren als auch im oberen Reaktorbereich abzuziehen.

Gemäß einer weiteren Ausführungsform der vorliegenden Erfindung wird der Mantelraum in zwei, drei oder mehr Zonen aufgeteilt. Beispielsweise im Fall, dass der Mantelraum in zwei Zonen aufgeteilt wird, kann die Trennung des Mantelraums bei einem beispielsweise vertikal angeordnetem Reaktor in halber Höhe des Reaktors oder bei einem beispielsweise liegend angeordnetem Reaktor bei halber Länge des Reaktors erfolgen, wobei auch andere Teilungsverhältnisse des Mantelraums möglich sind.

In einem solchen Zweizonenreaktor, Dreizonenreaktor oder Mehrzonenreaktor wird ein Kühlmedium oder Heizmedium einer bestimmten Temperatur in einer Zone im Gegenoder im Gleichstrombetrieb durch die Zone geführt. Jede weitere Zone kann mit dem gleichen oder einem anderem Kühl- oder Heizmedium der gleichen oder einer anderen Temperatur wahlweise im Gegen oder im Gleichstrom betrieben werden.

Das mindestens eine Kühlmedium und/oder das mindestens eine Heizmedium kann gemäß sämtlicher geeigneter Vorrichtungen in die mindestens eine Mantelraumzone eingebracht werden. Beispielsweise bevorzugt ist als eine solche Vorrichtung ein Flansch aus einem geeigneten Material, das sich gegenüber dem jeweiligen Medium bei den gewählten Drücken und Temperaturen inert verhält. Dieses Prinzip der Einbringung des mindestens einen Mediums kann ebenso auf den Austrag des Mediums aus der jeweiligen Mantelraumzone übertragen werden.

Gemäß einer besonders bevorzugten Ausführungsform der vorliegenden Erfindung wird der erfindungsgemäße Reaktor für Reaktionen eingesetzt, die in Anwesenheit mindestens eines Katalysators durchgeführt werden. Grundsätzlich kann dies ein homogener und/oder heterogener Katalysator sein, wobei der heterogene Katalysator als Suspensions- und/oder Festbettkatalysator eingesetzt werden kann. Gemäß einer insbesondere bevorzugten Ausführungsform wird im Rahmen der vorliegenden Erfindung der erfindungsgemäße Reaktor zu einer kontinuierlichen, heterogen katalysierten Herstellung einer chemischen Verbindung eingesetzt, wobei der mindestens eine heterogene Katalysator insbesondere bevorzugt als Festbettkatalysator eingesetzt wird.

Demgemäß beschreibt die vorliegende Erfindung ein wie oben beschriebenes Verfahren, wobei die chemische Verbindung in Anwesenheit eines Katalysators hergestellt wird, das dadurch gekennzeichnet ist, dass der Katalysator als Festbett in den inneren Rohren mit nicht-kreisförmigem Querschnitt in helixförmiger Ausbildung angeordnet sind.

Ebenso betrifft die vorliegende Erfindung einen Rohrbündelreaktor, der einen Mantel und mehrere in dem Mantel angeordnete innere Rohre mit einem nicht-kreisförmigen Querschnitt aufweist, wobei mindestens eines der inneren Rohre mit dem nicht-kreisförmigen Querschnitt in dem Bereich, in dem es von dem Mantel umgeben ist, zumindest teilweise helixförmig ausgebildet ist, der dadurch gekennzeichnet ist, dass mindestens eines der inneren Rohre in mindestens einem Rohrbereich miridestens einen Festbettkatalysator enthält.

Weiter beschreibt die vorliegende Erfindung einen solchen Rohrbündelreaktor, der dadurch gekennzeichnet ist, dass er höchstens 3 Umlenkbleche, bevorzugt kein Umlenkblech oder ebenfalls bevorzugt 1 bis 3 Umlenkbleche enthält

Das erfindungsgemäße Verfahren und der erfindungsgemäße Rohrbündelreaktor bieten also den Vorteil, dass trotz der Abwesenheit von Umlenkblechen oder trotz der im Vergleich zum Stand der Technik erheblichen Verminderung der Anzahl der im Reaktor vorhandenen Umlenkbleche die gleichen Wärmeübergangskoeffizienten erreicht werden. Neben dem bereits oben beschriebenen Verzicht auf zusätzliche Bauteile ist als weiterer Vorteil hervorzuheben, dass durch die geringe Anzahl der Umlenkbleche der Druckverlust im Mantelraum gegenüber geraden Rohren mit mindestens 5 Umlenkblechen um mindestens 40 bis 60 % reduziert werden kann, was sich unter anderem auf die Pumpenleistung und vor allem auf die Leistung des Gebläses auswirkt, über die Kühlmedium oder Heizmedium in den Mantelraum eingebracht werden.

Grunsätzlich können die inneren Rohre in jedem Bereich den mindestens einen Festbettkatalysator enthalten. Demgemäß umfasst die vorliegende Erfindung Ausführungsformen, gemäß denen der mindestens eine Festbettkatalysator in einem nicht-helixförmig ausgebildeten Rohrbereich und/oder in einem gegebenenfalls helixförmig ausgebildeten Rohrbereich mit einem kreisförmigen Querschnitt und/oder in einem helixförmig ausgebildeten Rohrbereich mit nicht-kreisförmigem Querschnitt enthalten ist. Besonders bevorzugt ist der mindestens eine Festbettkatalysator in mindestens einem Rohrbereich enthalten, der einen nicht-kreisförmigen Querschnitt aufweist und helixförmig ausgebildet ist.

Demgemäß betrifft die vorliegende Erfindung auch einen wie oben beschriebenen Rohrbündelreaktor, der dadurch gekennzeichnet ist, dass er in mindestens einem helixförmig ausgebildeten Rohrbereich mit nicht-kreisförmigem Querschnitt mindestens einen Festbettkatalysator enthält.

Hinsichtlich der möglichen und bevorzugten Ausführungsformen des Rohrbündelreaktors, der mindestens einen Festbettkatalysator enthält, sei hinsichtlich beispielsweise der Ausbildung der inneren Rohre und des Mantels auf die Ausführungsformen verwiesen, wie sie im Rahmen des obenstehend beschriebenen Verfahrens zur kontinuierlichen Herstellung einer chemischen Verbindung beschrieben sind.

Gemäß einer insbesondere bevorzugten Ausführungsform betrifft die vorliegende Erfindung einen vertikal angeordneten Rohrbündelreaktor zur kontinuierlichen Herstellung einer chemischen Verbindung, der einen Mantel und mehrere in dem Mantel angeordnete innere Rohre mit einem nicht-kreisförmigen Querschnitt aufweist, wobei mindestens eines der inneren Rohre mit dem nicht-kreisförmigen Querschnitt in dem Bereich, in dem es von dem Mantel umgeben ist, zumindest teilweise helixförmig ausgebildet ist und wobei mindestens eines der inneren Rohre in mindestens einem Rohrbereich mindestens einen Festbettkatalysator enthält, dadurch gekennzeichnet, dass der Reaktor im unteren Reaktorbereich mindestens eine Einlassöffnung zur Zufuhr einer Reaktionslösung und mindestens eine Einlassöffnung zur Zufuhr mindestens eine Kühl- oder Heizmediums aufweist und im oberen Reaktorbereich mindestens eine Auslassöffnung für die Reaktionslösung und mindestens eine Auslassöffnung für das mindestens eine Kühl- oder Heizmedium aufweist.

Werden dem Reaktor zwei oder mehr verschiedene Reaktionslösungen zugeführt und/oder zwei oder mehr Bestandteile der Reaktionslösung in zwei oder mehr Strömen zugeführt, umfasst die vorliegende Erfindung auch Ausführungsformen des Reaktors, gemäß denen der Reaktor, bevorzugt der vertikal angeordnete Reaktor, bevorzugt im unteren Reaktorbereich zwei oder mehr Einlassöffnungen für die verschiedenen Reaktionslösungen und/oder aufweist Ströme der Bestandteile der Reaktionslösung aufweist.

Werden dem Reaktor zwei oder mehr verschiedene Kühl- oder Heizmedien zugeführt, umfasst die vorliegende Erfindung auch Ausführungsformen des Reaktors, gemäß denen der Reaktor, bevorzugt der vertikal angeordnete Reaktor, bevorzugt im unteren Reaktorbereich zwei oder mehr Einlassöffnungen für die verschiedenen Kühl- oder Heizmedien aufweist.

Demgemäß betrifft die vorliegende Erfindung auch einen Rohrbündelreaktor zur kontinuierlichen Herstellung einer chemischen Verbindung, umfassend einen Mantel und mehrere in dem Mantel angeordnete innere Rohre mit einem nicht-kreisförmigen Querschnitt, der dadurch gekennzeichnet ist, dass mindestens eines der inneren Rohre mit dem nicht-kreisförmigen Querschnitt in dem Bereich, in dem es von dem Mantel umgeben ist, zumindest teilweise helixförmig ausgebildet ist.

Ebenso betrifft die vorliegende Erfindung auch einen wie oben beschriebenen Rohrbündelreaktor, der dadurch gekennzeichnet ist, dass der nicht-kreisförmige Querschnitt sowohl gegenüber liegende gerade Seiten als auch gegenüber liegende runde Seiten aufweist oder die Form eines Ovals oder die Form einer Ellipse aufweist.

Weiter betrifft die vorliegende Erfindung auch einen wie oben beschriebenen Rohrbündelreaktor, der dadurch gekennzeichnet ist, dass die Helix in dem von dem Mantel umgebenen, Bereich 1 bis 2000 vollständige Windungen aufweist.

Weiter betrifft die vorliegende Erfindung auch einen wie oben beschriebenen Rohrbündelreaktor, der dadurch gekennzeichnet ist, dass in dem Mantel 10 bis 10.000 innere Rohre mit nicht-kreisförmigem Querschnitt in helixförmiger Ausbildung angeordnet sind.

Gemäß weiter bevorzugter Ausführungsformen des erfindungsgemäßen Rohrbündelreaktors wird auf die Ausführungen verwiesen, wie sie obenstehend im Rahmen des erfindungsgemäßen Verfahrens und untenstehend ausgeführt sind.

Grundsätzlich können im erfindungsgemäßen Reaktor oder gemäß des erfindungsgemäßen Verfahrens sämtliche möglichen Reaktionen durchgeführt werden. Insbesondere sind das Verfahren oder der Reaktor gemäß vorliegender Erfindung für Reaktionen geeignet, in denen ein hocheffizienter Wärmeaustausch zwischen einer Reaktionslösung und einem Kühl- oder Heizmedium angestrebt wird.

Im Rahmen dieser Vielzahl an denkbaren Reaktionen sind unter anderem beispielsweise katalytische Umwandlungen anorganischer und/oder organischer Verbindungen zu erwähnen. Bevorzugt werden erfindungsgemäß organische Verbindungen hergestellt, wobei katalysierte, insbesondere heterogen katalysierte, und weiter insbesondere festbettkatalysierte Reaktionen weiter bevorzugt sind.

Gemäß besonders bevorzugter Ausführungsformen wird im erfindungsgemäßen Verfahren oder unter Verwendung des erfindungsgemäßen Reaktors als mindestens ein Katalysator ein Zeolithkatalysator, weiter bevorzugt mindestens ein Festbettzeolithkatalysator eingesetzt.

Umsetzungen, die in Anwesenheit mindestens eines Zeolithkatalysators durchgeführt werden können, sind beispielsweise Oxidationen, die Epoxidation von Olefinen wie beispielsweise die Herstellung von Propylenoxid aus Propylen und H₂O₂, die Hydroxylierung von Aromaten, wie beispielsweise Hydrochinon aus Phenol und H₂O₂ oder Toluol zu Kresol, die Umwandlung von Alkanen zu Alkoholen, Aldehyden und Säuren, Isomerisierungsreaktionen, wie beispielsweise die Umwandlung von Epoxiden zu Aldehyden, sowie weitere in der Literatur mit insbesondere Zeolith-Katalysatoren beschriebenen Umsetzungen, wie sie beispielsweise in W. Hölderich, "Zeolites: Catalysts for the Synthesis of Organic Compounds", Elsevier, Stud. Surf. Sci. Catal., 49, Amsterdam (1989), S. 69 bis 93, und insbesondere für mögliche Oxidationsreaktionen von B. Notari in Stud. Surf. Sci. Catal., 37 (1987), S. 413 bis 425, beschrieben sind.

Zeolithe sind bekanntermaßen kristalline Alumosilikate mit geordneten Kanal- und Käfigstrukturen, die Mikroporen aufweisen, die vorzugsweise kleiner als ungefähr 0,9 nm sind. Das Netzwerk solcher Zeolithe ist aufgebaut aus SiO₄- und AlO₄-Tetraedern, die über gemeinsame Sauerstoffbrücken verbunden sind. Eine Übersicht der bekannten Strukturen findet sich beispielsweise bei W. M. Meier, D. H. Olson und Ch. Baerlocher, "Atlas of Zeolithe Structure Types", Elsevier, 5. Auflage, Amsterdam 2001.

Es sind auch Zeolithe bekannt, die kein Aluminium enthalten und bei denen im Silikatgitter an Stelle des Si(IV) teilweise Titan als Ti(IV) steht. Diese Titanzeolithe, insbesondere solche mit einer Kristallstruktur von MFI-Typ, sowie Möglichkeiten zu Ihrer Herstellung sind beispielsweise in der EP-A 0 311 983 oder EP-A 0 405 978 beschrieben. Außer Silicium und Titan können solche Materialien auch zusätzliche Elemente wie z. B. Aluminium, Zirkonium, Zinn, Eisen, Kobalt, Nickel, Gallium, Germanium, Bor oder geringe Menge an Fluor enthalten. In den mit dem erfindungsgemäßen Verfahren vorzugsweise regenerierten Zeolith-Katalysatoren kann das Titan des Zeolithen teilweise oder vollständig durch Vanadium, Zirkonium, Chrom oder Niob oder einem Gemisch aus zwei oder mehr davon ersetzt sein. Das molare Verhältnis von Titan und/oder Vanadium, Zirkonium, Chrom oder Niob zur Summe aus Silicium und Titan und/oder Vanadium und/oder Zirkonium, und/oder Chrom und/oder Niob liegt in der Regel im Bereich von 0,01 : 1 bis 0,1 : 1.

Titanzeolithe, insbesondere solche mit einer Kristallstruktur vom MFI-Typ, sowie Möglichkeiten zu ihrer Herstellung sind beispielsweise in der WO 98/55228, EP-A 0 311 983 oder der EP-A 0 405 978 beschrieben.

Titanzeolithe mit MFI-Struktur sind dafür bekannt, dass sie über ein bestimmtes Muster bei der Bestimmung ihrer Röntgenbeugungsaufnahmen sowie zusätzlich über eine Gerüstschwingungsbande im Infrarotbereich (IR) bei etwa 960 cm⁻¹ identifiziert werden können und sich damit von Alkalimetalltitanaten oder kristallinen und amorphen TiO₂-Phasen unterscheiden.

Dabei sind im einzelnen Titan-, Germanium-, Tellur-, Vanadium-, Chrom-, Niob-, Zirkoniumhaltige Zeolithe mit Pentasil-Zeolith-Struktur, insbesondere die Typen mit röntgenografischer Zuordnung zur ABW-, ACO-, AEI-, AEL-, AEN-, AET-, AFG-, AFI-, AFN-, AFO-, AFR-, AFS-, AFT-, AFX-, AFY-, AHT-, ANA-, APC-, APD-, AST-, ATN-, ATO-, ATS-, ATT-, ATV-, AWO-, AWW-, BEA-, BIK-, BOG-, BPH-, BRE-, CAN-, CAS-, CFI-, CGF-, CGS-, CHA-, CHI-, CLO-, CON-, CZP-, DAC-, DDR-, DFO-, DFT-, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MEI-, MEL-, MEP-, MER-, MFI-, MFS-, MON-, MOR-, MSO-, MTF-, MTN-, MTT-, MTW-, MWW-, NAT-, NES-, NON-, OFF-, OSI-, PAR-, PAU-, PHI-, RHO-, RON-, RSN-, RTE-, RTH-, RUT-, SAO-, SAT-, SBE-, SBS-, SBT-, SFF-, SGT-, SOD-, STF-, STI-, STT-, TER-, THO-, TON-, TSC-, VET-, VFI-, VNI-, VSV-, WIE-, WEN-, YUG-, ZON-Struktur sowie zu Mischstrukturen aus zwei oder mehr der vorgenannten Strukturen zu nennen. Denkbar sind für den Einsatz im erfindungsgemäßen Verfahren weiterhin titanhaltige Zeolithe mit der Struktur des ITQ-4, SSZ-24; TTM-1, UTD-1, CIT-1 oder CIT-5. Als weitere titanhaltige Zeolithe sind solche mit der Struktur des ZSM-48 oder ZSM-12 zu nennen.

Die vorstehend diskutierten Zeolithe werden gemäß bevorzugter Ausführungsformen insbesondere für die Epoxidation von Olefinen, vorzugsweise solchen mit 2 bis 8 C-Atomen, weiter bevorzugt Ethylen, Propylen oder Buten, und insbesondere Propen zu den entsprechenden Olefinoxiden eingesetzt.

Insbesondere sind das erfindungsgemäße Verfahren oder der erfindungsgemäße Reaktor für die Umsetzung von organischen Verbindungen mit Hydroperoxiden geeignet. Als solche sind beispielsweise zu nennen:
- die bereits obenstehend beschriebene Epoxidation von Olefinen wie z.B. die Herstellung von Propenoxid aus Propen und H₂O₂ oder aus Propen und Gemischen, die H₂O₂ in situ liefern;
- Hydroxylierungen wie z.B die Hydroxylierung mono-, bi- oder polycyclischer Aromaten zu mono-, di- oder höher substituierten Hydroxyaromaten, beispielsweise die Umsetzung von Phenol und H₂O₂ oder von Phenol und Gemischen, die H₂O₂ in situ liefern, zu Hydrochinon;
- die Oximbildung aus Ketonen unter Anwesenheit von H₂O₂ oder Gemischen, die H₂O₂ in situ liefern, und Ammoniak (Ammonoximierung), beispielsweise die Herstellung von Cyclohexanonoxim aus Cyclohexanon;
- die Baeyer-Villiger-Oxidation.

Ganz besonders bevorzugt werden das erfindungsgemäße Verfahren und der erfindungsgemäße Reaktor zur kontinuierlichen Herstellung eines Epoxids verwendet, wobei weiter bevorzugt dieses Epoxid aus einem Olefin in Anwesenheit mindestens eines Zeolithkatalysators hergestellt wird.

Demgemäß betrifft die vorliegende Erfindung auch ein wie oben beschriebenes Verfahren, das dadurch gekennzeichnet ist, dass in dem Reaktor ein Olefin in Anwesenheit mindestens eines Zeolithkatalysators mit einem Hydroperoxid zu einem Epoxid umgesetzt wird.

Ebenso beschreibt die vorliegende Erfindung die Verwendung eines oben beschriebenen Reaktors zur Umsetzung eines Olefins in Anwesenheit mindestens eines Zeolithkatalysators mit einem Hydroperoxid unter Erhalt eines Epoxids.

Bevorzugt werden im Rahmen der vorliegenden Erfindung Ti-Zeolithe mit MFI-Struktur, MEL-Struktur, MFI/MEL-Mischstruktur oder MWW-Struktur eingesetzt. Als weiterhin bevorzugt sind im einzelnen die Ti-enthaltenden Zeolith-Katalysatoren, die im allgemeinen als "TS-1", "TS-2", "TS-3" bezeichnet werden, sowie Ti-Zeolithe mit einer zu beta-Zeolith isomorphen Gerüststruktur zu nennen. Ganz besonders bevorzugt werden im Rahmen der vorliegenden Erfindung Zeolith-Katalysatoren der TS-1 Struktur und der Ti-MWW-Struktur eingesetzt.

Als erfindungsgemäß einsetzbare Olefins sind unter anderem beispielsweise zu nennen:
Ethen, Propen, 1-Buten, 2-Buten, Isobuten, Butadien, Pentene, Piperylen, Hexene, Hexadiene, Heptene, Octene, Diisobuten, Trimethylpenten, Nonene, Dodecen, Tridecen, Tetra- bis Eicosene, Tri- und Tetrapropen, Polybutadiene, Polyisobutene, Isoprene, Terpene, Geraniol, Linalool, Linalylacetat, Methylencyclopropan, Cyclopenten, Cyclohexen, Norbomen, Cyclohepten, Vinylcyclohexan, Vinyloxiran, Vinylcyclohexen, Styrol, Cycloocten, Cyclooctadien, Vinylnorbornen, Inden, Tetrahydroinden, Methylstyrol, Dicyclopentadien, Divinylbenzol, Cyclododecen, Cyclododecatrien, Stilben, Diphenylbutadien, Vitamin A, Betacarotin, Vinylidenfluorid, Allylhalogenide, Crotylchlorid, Methallylchlorid, Dichlorbuten, Allylalkohol, Methallylalkohol, Butenole, Butendiole, Cyclopentendiole, Pentenole, Octadienole, Tridecenole, ungesättigte Steroide, Ethoxyethen, Isoeugenol, Anethol, ungesättigte Carbonsäuren wie z.B. Acrylsäure, Methacrylsäure, Crotonsäure, Maleinsäure, Vinylessigsäure, ungesättigte Fettsäuren, wie z.B. Ölsäure, Linolsäure, Palmitinsäure, natürlich vorkommende Fette und Öle.

Bevorzugt werden im erfindungsgemäßen Verfahren Alkene verwendet, die 2 bis 8 Kohlenstoffatome enthalten. Besonders bevorzugt werden Ethen, Propen, und Buten umgesetzt. Insbesondere bevorzugt wird Propen umgesetzt.

Demgemäß beschreibt die vorliegende Erfindung ein wie oben beschriebenes Verfahren, das dadurch gekennzeichnet ist, dass in dem Reaktor Propen in Anwesenheit mindestens eines Zeolithkatalysators mit TS-1-Struktur und/oder Ti-MWW-Struktur mit mit einem Hydroperoxid zu Propylenoxid umgesetzt wird.

Ebenso beschreibt die vorliegende Erfindung die Verwendung eines oben beschriebenen Reaktors zur Umsetzung von Propen in Anwesenheit eines Zeolithkatalysators mit TS-1-Struktur und/oder Ti-MWW-Struktur mit einem Hydroperoxid unter Erhalt von Propylenoxid.

Im Rahmen der vorliegenden Erfindung wird unter dem Begriff "Hydroperoxid" eine Verbindung der allgemeinen Formel ROOH verstanden. Beispiele für erfindungsgemäß einsetzbare Hydroperoxide sind unter anderem etwa tert-Butylhydroperoxid, Ethylbenzolhydroperoxid, tert-Amylhydroperoxid, Cumenhydroperoxid, Cyclohexylhydroperoxid, Methylcyclohexylhydroperoxid, Tetrahydronaphthalinhydroperoxid, Isobutylbenzolhydroperoxid, Ethylnaphthalinhydroperoxid, Persäuren wie beispielsweise Peressigsäure oder Wasserstoffperoxid. Auch Gemische aus zwei oder mehr Hydroperoxiden sind erfindungsgemäß einsetzbar. Bevorzugt wird im Rahmen der vorliegende Erfindung Wasserstoffperoxid als Hydroperoxid eingesetzt, wobei weiter bevorzugt eine wässerige Wasserstoffperoxidlösung eingesetzt wird.

Zur Herstellung des bevorzugt verwendeten Wasserstoffperoxides kann dabei beispielsweise auf das Anthrachinonverfahren zurückgegriffen werden, nach dem praktisch die gesamte Menge des weltweit produzierten Wasserstoffperoxids hergestellt wird. Einen Überblick über das Anthrachinonverfahren gibt "Ullmann's Encyclopedia of Industrial Chemistry", 5. Auflage, Band 13, Seiten 447 bis 456.

Ebenso ist es denkbar, zur Wasserstoffperoxidgewinnung Schwefelsäure durch anodische Oxidation unter gleichzeitiger kathodischer Wasserstoffentwicklung in Peroxodischwefelsäure zu überführen. Die Hydrolyse der Peroxodischwefelsäure führt dann auf dem Weg über Peroxoschwefelsäure zu Wasserstoffperoxid und Schwefelsäure, die damit zurückgewonnen wird.

Möglich ist selbstverständlich auch die Darstellung von Wasserstoffperoxid aus den Elementen.

Vor dem Einsatz von Wasserstoffperoxid im erfindungsgemäßen Verfahren ist es möglich, beispielsweise eine kommerziell erhältliche Wasserstoffperoxid-Lösung von unerwünschten Ionen zu befreien. Dabei sind unter anderem Methoden denkbar, wie sie beispielsweise in der WO 98/54086, in der DE-A 42 22 109 oder in der WO 92/06918 beschrieben sind. Ebenso kann mindestens ein Salz, das in der Wasserstoffperoxid-Lösung enthalten ist, durch eine Vorrichtung aus der Wasserstoffperoxid-Lösung mittels lonenaustausch entfert werden, die dadurch gekennzeichnet ist, dass die Vorrichtung mindestens ein nicht-saures lonenaustauscherbett mit einer Strömungsquerschnittsfläche F und einer Höhe H aufweist, wobei die Höhe H des lonenaustauscherbettes kleiner oder gleich 2,5 • F^{1/2} und insbesondere kleiner oder gleich 1,5 • F^{1/2} ist. Im Rahmen der vorliegenden Erfindung können prinzipiell alle nicht-sauren lonenaustauscherbetten mit Kationenaustauscher und/oder Anionenaustauscher eingesetzt werden. Auch innerhalb eines lonenaustauscherbettes können Kationen- und Anionenaustauscher als so genannte Mischbetten verwendet werden. In einer bevorzugten Ausführungsform der vorliegenden Erfindung wird nur ein Typ von nicht-saueren Ionenaustauschern eingesetzt. Weiter bevorzugt ist der Einsatz eines basischen Ionentausches, besonders bevorzugt der eines basischen Anionentauschers und weiter besonders bevorzugt der eines schwach basischen Anionentauschers.

Besonders bevorzugt wird das erfindungsgemäße Verfahren in Anwesenheit mindestens eines Lösungsmittels durchgeführt. Insbesondere bevorzugt sind als Lösungsmittel hierbei etwa
- Wasser;
- Alkohole, bevorzugt Alkohole mit weniger als 6 Kohlenstoffatomen, weiter bevorzugt Methanol, Ethanol, Propanole, Butanole, Pentanole;
- Diole oder Polyole, bevorzugt solche mit weniger als 6 Kohlenstoffatomen;
- Ether wie beispielsweise Diethylether, Tetrahydrofuran, Dioxan, 1,2-Diethoxyethan, 2-Methoxyethanol;
- Ester wie beispielsweise Methylacetat oder Butyrolacton;
- Amide wie beispielsweise Dimethylformamid, Dimethylacetamid, N-Methylpyrrolidon;
- Ketone wie beispielsweise Aceton;
- Nitrile wie beispielsweise Acetonitril;
- oder Gemische aus zwei oder mehr der genannten Verbindungen wie beispielsweise ein Gemisch aus mindestens zwei Alkoholen wie beispielsweise aus Methanol und Ethanol oder ein Gemisch aus mindestens einem Alkohol und Wasser wie beispielsweise aus Methanol und Wasser oder Ethanol und Wasser oder Methanol, Ethanol und Wasser oder wie beispielsweise ein Gemisch aus Acetonitril und Wasser.

Ganz besonders bevorzugt werden im erfindungsgemäßen Verfahren als Lösungsmittel Methanol oder Wasser oder ein Gemisch aus Wasser und Methanol verwendet. Gemäß einer insbesondere bevorzugten Ausführungsform werden diese Lösungsmittel in Kombination mit einem Zeolithkatalysator der TS-1-Struktur verwendet.

Gemäß einer ebenfalls ganz besonders bevorzugten Ausführungsform des erfindungsgemäßen Verfahrens wird als Lösungsmittel Acetonitril oder Wasser oder ein Gemisch aus Acetonitril und Wasser verwendet. Gemäß einer insbesondere bevorzugten Ausführungsform wird dieses Lösungsmittel in Kombination mit einem Zeolithkatalysator der Ti-MWW-Struktur verwendet.

Demgemäß beschreibt die vorliegende Erfindung ein wie oben beschriebenes Verfahren, das dadurch gekennzeichnet ist, dass in dem Reaktor Propen in Anwesenheit mindestens eines Zeolithkatalysators mit TS-1-Struktur und Methanol oder Wasser oder eines Gemischs aus Wasser und Methanol als Lösungsmittel oder eines Zeolithkatalysators mit Ti-MWW-Struktur und Acetonitril oder Wasser oder eines Gemischs aus Wasser und Acetonitril als Lösungsmittel mit Wasserstoffperoxid zu Propylenoxid umgesetzt wird.

Ebenso beschreibt die vorliegende Erfindung die Verwendung eines oben beschriebennen Reaktors zur Umsetzung von Propen in Anwesenheit eines Zeolithkatalysators mit TS-1-Struktur und Methanol oder Wasser oder eines Gemisches aus Wasser und Methanol als Lösungsmittel oder eines Zeolithkatalysators mit Ti-MWW-Struktur und Acetonitril oder Wasser oder eines Gemisches aus Acetonitril und Wasser als Lösungsmittel mit Wasserstoffperoxid unter Erhalt von Propylenoxid.

Gemäß einer weiteren Ausführungsform des erfindungsgemäßen Verfahrens wird der in dem erfindungsgemäßen Rohrbündelreaktor bevorzugt enthaltene Festbettkatalysator, weiter bevorzugt der Zeolithfestbettkatalysator und insbesondere der Titanzeolithfestbettkatalysator nach dem Einsatz durch ein Verfahren regeneriert, bei dem die Regenerierung durch gezieltes Abbrennen der für die Deaktivierung verantwortlichen Beläge erfolgt. Dabei wird bevorzugt in einer Inertgasatmosphäre gearbeitet, die genau definierte Mengen an Sauerstoff liefernden Substanzen enthält. Ein solches Regenerierungsverfahren ist unter anderem in der WO 98/55228 und der DE 197 23 949 A1 beschrieben. Besonders bevorzugt verbleibt im Rahmen es erfindungsgemäßen Verfahrens der Katalysator während der Regenerierung im Reaktor.

Nach der Regeneration sind die Aktivität und/oder die Selektivität des Katalysators, verglichen mit dem Zustand unmittelbar vor der Regeneration, erhöht. Bevorzugt weist der Katalysator nach der Regenerierung seine ursprüngliche Anfangsaktivität und/oder seine ursprüngliche Anfangsselektivität auf.

Der zu regenerierende, erfindungsgemäß bevorzugt eingesetzte Zeolith-Katalysator wird entweder in dem Rohrbündelreaktor oder in einem externen Ofen, bevorzugt in dem erfindungsgemäßen Rohrbündelreaktor, in einer Atmosphäre, die 0,1 bis ungefähr 20 Volumen-Anteile von Sauerstoff liefernden Substanzen, besonders bevorzugt 0,1 bis 9 Volumenanteile Sauerstoff und insbesondere bevorzugt 0,1 bis 6 Volumenanteile Sauerstoff enthält, auf eine Temperatur im Bereich von 250 °C bis 800 °C, vorzugsweise von 400 °C bis 550 °C und insbesondere von 450 °C bis 500 °C aufgeheizt. Dabei wird das Aufheizen vorzugsweise mit einer Aufheizrate von 0,1 °C/min bis 20 °C/min, vorzugsweise von 0,2 °C/min bis 15 °C/min und insbesondere von 0,3 °C/min bis 10 °C/min durchgeführt. Bevorzugt wird der Katalysator im Rohrbündelreaktor regeneriert.

Während dieser Aufheizphase wird der Katalysator bis zu einer Temperatur aufgeheizt, bei der die sich dort befindlichen, meist organischen Beläge zu zersetzen beginnen, während gleichzeitig die Temperatur über den Sauerstoffgehalt geregelt wird und somit nicht derart ansteigt, dass es zu Schädigungen der Katalysatorstruktur und/oder des Reaktors kommt. Das langsame Erhöhen der Temperatur beziehungsweise das Verweilen bei niedriger Temperatur durch Einstellen des entsprechenden Sauerstoffgehaltes und der entsprechenden Heizleistung ist bei hohen organischen Beladungen des zu regenerierenden Katalysators ein wesentlicher Schritt zur Verhinderung einer lokalen Überhitzung des Katalysators.

Sinkt die Temperatur des Abgasstroms am Reaktorausgang trotz steigender Mengen an Sauerstoff liefernden Substanzen im Gasstrom, so ist das Abbrennen der organischen Beläge beendet. Die Dauer der Behandlung beträgt im Allgemeinen jeweils 1 bis 30, vorzugsweise ungefähr 2 bis ungefähr 20 und insbesondere ungefähr 3 bis ungefähr 10 Stunden.

Das anschließende Abkühlen des regenerierten Katalysators wird bevorzugt so durchgeführt, dass das Abkühlen nicht zu schnell erfolgt, da sonst die mechanische Festigkeit des Katalysators und/oder des Reaktors negativ beeinflusst werden kann. Für das Abkühlen wird eine ähnliche Temperaturrampe verwendet wie für das Aufheizen.

Es kann erforderlich sein, den Katalysator nach der durchgeführten Regeneration durch Calcinieren, wie oben beschrieben, einer Spülung mit Wasser und/oder verdünnten Säuren wie beispielsweise Salzsäure zu unterziehen, um die durch Verunreinigung der Edukte gegebenenfalls verbleibende anorganische Beladung des Katalysators zu entfernen. Anschließend kann eine erneute Trocknung und/oder ein erneutes Calcinieren des Katalysators, bevorzugt im Rohrbündelreaktor, durchgeführt werden.

In einer weiteren Ausführungsform des erfindungsgemäßen Verfahrens wird der zumindest teilweise deaktivierte Katalysator vor dem Aufheizen gemäß der Regenerationsprozedur mit einem Lösungsmittel im Rohrbündelreaktor oder in einem externen Reaktor, bevorzugt im Rohrbündelreaktor, gewaschen, um noch anhaftendes Wertprodukt zu entfernen. Dabei wird das Waschen so durchgeführt, dass zwar die jeweils am Katalysator anhaftenden Wertprodukte von diesem entfernt werden können, aber Temperatur und Druck nicht so hoch gewählt werden, dass die meist organischen Beläge ebenfalls entfernt werden. Vorzugsweise wird der Katalysator dabei mit einem geeigneten Lösungsmittel lediglich gespült. Somit eignen sich für diesen Waschvorgang alle Lösungsmittel, in denen sich das jeweilige Umsetzungsprodukt gut löst. Die benutzte Menge an Lösungsmittel sowie die Dauer des Waschvorgangs sind nicht kritisch. Der Waschvorgang kann mehrmals wiederholt und bei erhöhter Temperatur durchgeführt werden. Bei Verwendung von CO₂ als Lösungsmittel ist überkritischer Druck bevorzugt, ansonsten kann der Waschvorgang unter Normaldruck bzw. erhöhtem oder überkritischem Druck erfolgen. Nach der Beendigung des Waschvorgangs wird der Katalysator im Allgemeinen getrocknet. Obwohl der Trocknungsvorgang im allgemeinen unkritisch ist, sollte die Trocknungstemperatur die Siedetemperatur des zum Waschen verwendeten Lösungsmittels nicht zu stark übersteigen, um ein schlagartiges Verdampfen des Lösungsmittels in den Poren, Insbesondere in den Mikroporen zu vermeiden, da auch dies zu Schädigungen des Katalysators führen kann.

Das erfindungsgemäße Verfahren kann in einer oder mehreren Stufen durchgeführt werden, wobei in mindestens einer Verfahrensstufe eine chemische Verbindung in mindestens einem Rohrbündelreaktor, der einen Mantel und mehrere in dem Mantel angeordnete innere Rohre aufweist, wobei mindestens eines der inneren Rohre in dem Bereich, in dem es von dem Mantel umgeben ist, zumindest teilweise einen nicht-kreisförmigen Querschnitt aufweist und helixförmig ausgebildet ist, kontinuierlich hergestellt wird. Die erfindungsgemäß kontinuierlich hergestellt Verbindung kann hierbei das Endprodukt des Verfahrens oder ein Zwischenprodukt des Verfahrens darstellen, das unmittelbar oder später weiterverarbeitet wird.

Wird das erfindungsgemäße Verfahren in einer Stufe durchgeführt, so umfasst die vorliegende Erfindung Ausführungsformen, in denen einer oder mehrere der oben beschriebenen Reaktoren eingesetzt werden. Werden zwei oder mehr der Reaktoren eingesetzt, so ist es beispielsweise möglich, mindestens zwei dieser Reaktoren parallel zu schalten.

Insbesondere im Falle der erfindungsgemäß unter anderem bevorzugten Herstellung eines Epoxids, besonders bevorzugt von Propylenoxid, kann die Umsetzung eines Olefins, besonders bevorzugt von Propen, in einer oder mehreren Stufen durchgeführt werden.

Wird dieses bevorzugte Verfahren in einer Stufe durchgeführt, so schließt sich an die Umsetzung in dem mindestens einen Reaktor der Umsetzungsstufe bevorzugt mindestes eine Abtrennstufe ein, in der mindestens ein Wertprodukt aus der Reaktionslösung, die aus dem Reaktor abgeführt wird, abgetrennt wird. Solche Wertprodukte sind im Falle der unter anderem bevorzugten Epoxidherstellung beispielsweise das Epoxid, das nicht-umgesetzte Olefin, das mindestens eine Lösungsmittel oder mindestens ein während der Reaktion entstandendes Nebenprodukt. Gemäß weiter bevorzugter Ausführungsformen des erfindungsgemäßen Verfahrens wird mindestens eines der abgetrennten Wertprodukte wie beispielsweise das mindestens eine Lösungsmittel und/oder nicht-umgesetztes Olefin in die Umsetzungsstufe zurückgeführt.

Wird beispielsweise ein homogener Katalysator oder ein heterogener Suspensionskatalysator in der Umsetzungsstufe eingesetzt so umfasst die vorliegende Erfindung Ausführungsformen, gemäß denen der Katalysator aus der Reaktionslösung, die aus dem Reaktor abgeführt wird, abgetrennt, gegebenenfalls, falls erforderlich, in geeigneter Weise regeneriert wird und in die Umsetzungsstufe rückgeführt wird.

Demgemäß betrifft die vorliegende Erfindung auch eine Vorrichtung zur kontinuierlichen Herstellung einer chemischen Verbindung, umfassend mindestens einen Reaktor und mindestens eine Abtrennvorrichtung, dadurch gekennzeichnet, dass mindestens einer der Reaktoren ein Rohrbündelreaktor ist, der einen Mantel und mehrere in dem Mantel angeordnete innere Rohre mit einem nicht-kreisförmigen Querschnitt aufweist, dadurch gekennzeichnet, dass mindestens eines der inneren Rohre mit dem nicht-kreisförmigen Querschnitt in dem Bereich, in dem es von dem Mantel umgeben ist, zumindest teilweise helixförmig ausgebildet ist.

Unter anderem bevorzugt wird als Abtrennvorrichtung beispielsweise mindestens eine Destillationskolonne. Bevorzugte Destillationskolonnen sind beispielsweise Trennwandkolonnen, bei denen, je nach chemischer Natur der Bestandteile der Reaktionslösung, die den Reaktor, in dem die Umsetzung durchgeführt wird, verlässt Bestandteile der Reaktionslösung über Sumpf, über mindestens einen Seitenabzug und/oder über Kopf abgetrennt werden können.

Gemäß einer insbesondere bevorzugten Ausführungsform des erfindungsgemäßen Verfahrens wird in der Umsetzungsstufe ein Olefin, bevorzugt Propen, mit einem Hydroperoxid, bevorzugt Wasserstoffperoxid, umgesetzt, wobei ein Gemisch (G0) erhalten wird. In dieser Umsetzungsstufe wird weiter besonders bevorzugt ein zeolithischer Festbettkatalysator der Struktur TS-1 eingesetzt, wobei weiter bevorzugt Methanol als Lösungsmittel verwendet wird.

In der erfindungsgemäßen Vorrichtung, umfassend den erfindungsgemäßen Reaktor und die Abtrennvorrichtung, wird aus diesem Gemisch (G0), enthaltend Epoxid, bevorzugt Propylenoxid, nicht-umgesetztes Olefin, bevorzugt Propen, und Methanol, das nicht-umgesetzte Olefin, bevorzugt Propen abgetrennt.

Demgemäß beschreibt die vorliegende Erfindung auch ein wie oben beschriebenes Verfahren, das die Schritte (i) und (ii) umfasst
(i) Kontinuierliche Umsetzung eines Olefins mit einem Hydroperoxid unter Erhalt eines Gemisches (G0), enthaltend Epoxid und nicht-umgesetztes Olefin;
(ii) Abtrennung des nicht-umgesetzten Olefins aus dem Gemisch (G0) unter Erhalt eines Gemisches (G1), enthaltend Epoxid,
wobei in Schritt (i) mindestens ein Rohrbündelreaktor eingesetzt wird, der einen Mantel und mehrere in dem Mantel angeordnete innere Rohre aufweist, wobei mindestens eines der inneren Rohre in dem Bereich, in dem es von dem Mantel umgeben ist, zumindest teilweise einen nicht-kreisförmigen Querschnitt aufweist und helixförmig ausgebildet ist.

Gemäß einer unter anderem bevorzugten Ausführungsform enthält das Gemisch (G0) zusätzlich nicht-umgesetztes Hydroperoxid. Gemäß einer weiter bevorzugten Ausführungsform wird aus dem Gemisch (G0) auch das Epoxid abgetrennt.

Wie bereits oben beschrieben, kann erfindungsgemäß das in Stufe (ii) abgetrennte nicht-umgesetzte Olefin in die Stufe (i) rückgeführt werden. Gemäß einer weiter bevorzugten Ausführungsform des erfindungsgemäßen Verfahrens schließt sich an die Abtrennstufe (ii) mindestens eine zweite Umsetzungsstufe (iii) an, der das in Stufe (ii) abgetrennte nicht-umgesetzte Olefin zugeführt wird.

Demgemäß betrifft die vorliegende Erfindung ein wie oben beschriebenes Verfahren, umfassend die Stufen (i) bis (iii)
(i) Umsetzung des Olefins mit Hydroperoxid unter Erhalt einer Mischung, umfassend Epoxid und nicht-umgesetztes Olefin,
(ii) Abtrennung des nicht-umgesetzten Olefins aus der aus Stufe (i) resultierenden Mischung,
(iii) Umsetzung des abgetrennten Olefins aus Stufe (ii) mit Hydroperoxid,
das dadurch gekennzeichnet ist, dass in mindestens einer der Stufen (i) und (iii) mindestens ein Rohrbündelreaktor zur Umsetzung des Olefins eingesetzt wird, der einen Mantel und mehrere in dem Mantel angeordnete innere Rohre aufweist, wobei mindestens eines der inneren Rohre in dem Bereich, in dem es von dem Mantel umgeben ist, zumindest teilweise einen nicht-kreisförmigen Querschnitt aufweist und helixförmig ausgebildet ist

Gemäß einer insbesondere bevorzugten Ausführungsform wird in das abgetrennte Olefin nach der Abtrennung zunächst aufgearbeitet und anschließend in (iii) umgesetzt.

Gemäß einer weiter bevorzugten Ausführungsform wird in (iii) ausschließlich oder zusätzlich zu dem abgetrennten Olefin frisches Olefin umgesetzt.

Gemäß einer weiter bevorzugten Ausführungsform wird in (iii) als Hydroperoxid das in (i) nicht-umgesetzte Hydroperoxid eingesetzt.

Besonders bevorzugt wird als Olefin Propen eingesetzt und weiter besonders bevorzugt als Hydroperoxid Wasserstoffperoxid eingesetzt.

Bevorzugt werden die in den Stufen (i) und (iii) eingesetzten Reaktoren als Festbettreaktoren verwendet Insbesondere bevorzugt wird in diesen Festbettreaktoren als Datalysator ein Titansilikalitkatalysator der Struktur Ti-TS1 eingesetzt. Gemäß einer ebenfalls bevorzugten Ausführungsform wird als Katalysator eine Zeolithkatalysator der Struktur Ti-MWW eingesetzt.

Demgemäß beschreibt die vorliegende Erfindung ein wie oben beschriebenes Verfahren, umfassend die Stufen (i) bis (iii)
(i) Umsetzung des Olefins mit Hydroperoxid in Anwesenheit eines Festbett-Titanzeolithkatalysators der Struktur Ti-TS1 und/oder Ti-MWW unter Erhalt einer Mischung, umfassend Epoxid und nicht-umgesetztes Olefin und bevorzugt nicht-umgesetztes Hydroperoxid,
(ii) Abtrennung des nicht-umgesetzten Olefins und bevorzugt Epoxid aus der aus Stufe (i) resultierenden Mischung,
(iii) Umsetzung des abgetrennten und bevorzugt aufgearbeiteten Olefins aus Stufe (ii) und/oder von frischem Olefin mit Hydroperoxid, bevorzugt mit gemäß (i) nichtumgesetztem Hydroperoxid, in Anwesenheit eines Festbett-Titanzeolithkatalysators der Struktur Ti-TS1 und/oder Ti-MWW,
das dadurch gekennzeichnet ist, dass in mindestens einer der Stufen (i) und (iii) mindestens ein Rohrbündelreaktor zur Umsetzung des Olefins eingesetzt wird, der einen Mantel und mehrere in dem Mantel angeordnete innere Rohre aufweist, wobei mindestens eines der inneren Rohre in dem Bereich, in dem es von dem Mantel umgeben ist, zumindest teilweise einen nicht-kreisförmigen Querschnitt aufweist und helixförmig ausgebildet ist

Gemäß einer weiter bevorzugten Ausführungsform beschreibt die vorliegende Erfindung ein wie oben beschriebenes Verfahren, umfassend die Stufen (i) bis (iii) und zusätzlich umfassend die Stufe (iv)
(i) Umsetzung des Olefins mit Hydroperoxid in Anwesenheit eines Festbett-Titanzeolithkatalysators der Struktur Ti-TS1 und/oder Ti-MWW unter Erhalt einer Mischung, umfassend Epoxid und nicht-umgesetztes Olefin,
(ii) Abtrennung des nicht-umgesetzten Olefins aus der aus Stufe (i) resultierenden Mischung,
(iii) Umsetzung des abgetrennten und bevorzugt aufgearbeiteten Olefins aus Stufe (ii) und/oder von frischem Olefin mit Hydroperoxid, bevorzugt mit gemäß (i) nichtumgesetztem Hydroperoxid, in Anwesenheit eines Festbett-Titanzeolithkatalysators der Struktur Ti-TS1 und/oder Ti-MWW,
(iv) Regenerierung des in Stufe (i) und/oder Stufe (iii) eingesetzten Festbett-Titanzeolithkatalysators der Struktur Ti-TS1 und/oder T-MWW,
wobei in mindestens einer der Stufen (i) und (iii), bevorzugt in Stufe (i), mindestens ein Rohrbündelreaktor zur Umsetzung des Olefins eingesetzt wird, der den Festbett-Titanzeolithkatalysator der Struktur Ti-TS1 und/oder Ti-MWW enthält und der einen Mantel und mehrere in dem Mantel angeordnete innere Rohre aufweist, wobei mindestens eines der inneren Rohre in dem Bereich, in dem es von dem Mantel umgeben ist, zumindest teilweise einen nicht-kreisförmigen Querschnitt aufweist und helixförmig ausgebildet ist, wobei der Festbettkatalysator in dem mindestens einen Rohrbündelreaktor regeneriert wird.

Gemäß einer bevorzugten Ausführung wird im erfindungsgemäßen kontinuierlichen Verfahren bei der Regeneration des Katalysators das Verfahren nicht unterbrochen, was zu einem erhöhten Verfahrensdurchsatz führt. Dies wird erfindungsgemäß durch die Verwendung von mindestens zwei parallel verschalteten Reaktoren erreicht, die wechselweise betrieben werden können. Besonders bevorzugt handelt es sich bei den mindestens zwei parallel verschalteten Reaktoren um erfindungsgemäße Rohrbündelreaktoren. Besonders bevorzugt werden im erfindungsgemäßen Verfahren mindestens zwei, weiter bevorzugt mindestens drei und insbesondere bevorzugt drei oder vier erfindungsgemäße Rohrbündelreaktoren parallel verschaltet.

Die Katalysatorregeneration kann derart durchgeführt werden, dass mindestens einer der parallel geschalteten Reaktoren aus der jeweiligen Reaktionsstufe abgekoppelt wird und der in diesem Reaktor enthaltene Katalysator regeneriert wird, wobei im Laufe des kontinuierlichen Verfahrens in jeder Stufe immer mindestens ein Reaktor zur Umsetzung des Edukts oder der Edukte zur Verfügung steht.

Demgemäß beschreibt die vorliegende Erfindung auch einen Verbund von mindestens zwei, bevorzugt drei oder vier parallel verschalteten erfindungsgemäßen Rohrbündelreaktoren, die jeweils einen Mantel und mehrere in dem Mantel angeordnete innere Rohre mit einem nicht-kreisförmigen Querschnitt aufweisen, wobei jeweils mindestens eines der inneren Rohre mit dem nicht-kreisförmigen Querschnitt in dem Bereich, in dem es von dem Mantel umgeben ist, zumindest teilweise helixförmig ausgebildet ist und wobei jeweils mindestens eines der inneren Rohre In mindestens einem Rohrbereich mindestens einen Festbettkatalysator enthält.

Ebenso beschreibt die vorliegende Erfindung auch eine wie oben beschriebene Vorrichtung zur kontinuierlichen Herstellung einer chemischen Verbindung, umfassend mindestens zwei, bevorzugt drei oder vier parallel verschaltete Reaktor und mindestens eine Abtrennvorrichtung, dadurch gekennzeichnet, dass die parallel verschalteten Reaktoren Rohrbündelreaktoren sind, die jeweils einen Mantel und mehrere in dem Mantel angeordnete innere Rohre mit einem nicht-kreisförmigen Querschnitt aufweisen, dadurch gekennzeichnet, dass jeweils mindestens eines der inneren Rohre mit dem nicht-kreisförmigen Querschnitt in dem Bereich, in dem es von dem Mantel umgeben ist, zumindest teilweise helixförmig ausgebildet ist.

Bei der obenstehend beschriebenen Regeneration des Festbettkatalysators in einem erfindungsgemäßen Rohrbündelreaktor wird gemäß einer bevorzugten Ausführungsform des erfindungsgemäßen Verfahrens der Mantelraum zum Aufheizen des Reaktors mit mindestens einem Heizmedium durchströmt. Insbesondere beispielsweise bevorzugt wird hierbei als Heizmedium Heißluft, die eine Temperatur im Bereich von beispielsweise bevorzugt 50 bis 550 °C aufweist.

Demgemäß beschreibt die vorliegende Erfindung auch ein wie oben beschriebenes Verfahren, das dadurch gekennzeichnet ist, dass der Mantelraum mindestens eines der in mindestens einer Verfahrensstufe eingesetzten erfindungsgemäßen Rohrbündelreaktors bei Durchführung des Herstellungsverfahrens im Reaktor von mindestens einem Kühlmedium und bei Durchführung der Katalysatorregeneration im Reaktor von mindestens einem Heizmedium durchströmt wird.

Erfindungsgemäß kann der mindestens eine erfindungsgemäße Reaktor sowohl in Stufe (i) als auch in Stufe (iii) als auch in beiden Stufen (i) und (iii) eingesetzt werden.

Wird der erfindungsgemäße Reaktor in einer der Stufen (i) und (iii) nicht eingesetzt, so kann in dieser Stufe beispielsweise mindestens ein Rohrreaktor oder mindestes ein Rohrbündelreaktor oder mindestens eine Rührkessel oder mindestens eine Rührkesselkaskade oder mindestens ein Schachtreaktor eingesetzt werden, wie sie aus dem Stand der Technik bekannt sind. Wird in einer der Stufen (i) und (iii) ein aus dem Stand der Technik bekannter Reaktor eingesetzt, so kann dieser als Festbettreaktor oder Suspensionsreaktor ausgebildet sein. Bevorzugt wird ein Festbettreaktor und weiter bevorzugt ein Festbettschachtreaktor eingesetzt.

Werden in beiden Stufen jeweils mindestens einer der erfindungsgemäßen Reaktoren eingesetzt, so kann der mindestens eine in Stufe (i) eingesetzte Reaktor gleich oder verschieden von dem mindestens einen in Stufe (iii) eingesetzten Reaktor sein. Die Unterschiede können sich beispielsweise auf sämtliche, bereits obenstehend beschriebenen Unterschiede hinsichtlich Ausgestaltung, Anzahl und/oder Anordnung der inneren Rohre und/oder des Mantels dieser Reaktoren beziehen. Weiter kann der in der Stufe (i) oder (iii) eingesetzte erfindungsgemäße Reaktor isotherm betrieben werden und der in Stufe (iii) oder (i) eingesetzte erfindungsgemäße Reaktor adiabatisch betrieben werden.

Insbesondere bevorzugt werden im Rahmen des erfindungsgemäßen Verfahrens in Stufe (i) mindestens ein, bevorzugt mindestens zwei und weiter bevorzugt drei oder vier erfindungsgemäße Rohrbündelreaktoren eingesetzt und in Stufe (iii) mindestens ein Schachtreaktor eingesetzt. Weiter bevorzugt werden der mindestens eine Reaktor in Stufe (i) isotherm und der mindestens eine Reaktor in Stufe (iii) adiabatisch betrieben.

Demgemäß beschreibt die vorliegende Erfindung eine Vorrichtung zur kontinuierlichen Herstellung einer chemischen Verbindung, umfassend mindestens einen, bevorzugt mindestens zwei und insbesondere bevorzugt mindestens drei oder vier parallel verschaltete Rohrbündelreaktoren, die jeweils einen Mantel und mehrere in dem Mantel angeordnete innere Rohre mit einem nicht-kreisförmigen Querschnitt aufweisen, wobei jeweils mindestens eines der inneren Rohre mit dem nicht-kreisförmigen Querschnitt in dem Bereich, in dem es von dem Mantel umgeben ist, zumindest teilweise helixförmig ausgebildet ist, eine diesem mindestens einen Rohrbündelreaktor nachgeschaltete Destillationskolonne und mindestens einen der Destillationskolonne nachgeschalteten Schachtreaktor.

Gemäß einer insbesondere bevorzugten Ausführungsform des erfindungsgemäßen Verfahrens werden in Stufe (i) mindestens ein erfindungsgemäßer isothermer Rohrbündelreaktor und In Stufe (iii) ein mindestens ein adiabatischer Schachtreaktor eingesetzt.

Besonders bevorzugt wird das oben beschriebene erfindungsgemäße zweistufige Verfahren mit Abtrennstufe für die kontinuierliche Herstellung von Propylenoxid aus Propen unter Verwendung von Wasserstoffperoxid als Hydroperoxid, Methanol als Lösungsmittel und einem Titansilikalitkatalysator als Festbettkatalysator durchgeführt.

In Stufe (i) wird dieses Verfahren bei Temperaturen bevorzugt im Bereich von 20 bis 80 °C, weiter bevorzugt im Bereich von 25 bis 70 °C und insbesondere bevorzugt im Bereich von 30 bis 60 °C durchgeführt.

Dabei wird ein Druck gewählt, der bevorzugt im Bereich von 10 bis 30 bar, weiter bevorzugt im Bereich von 15 bis 28 bar und insbesondere bevorzugt im Bereich von 18 bis 25 bar liegt.

Als Reaktor wird ein erfindungsgemäßer Rohrbündelreaktor eingesetzt, der bevorzugt eine Länge im Bereich von 5 bis 20 m, weiter bevorzugt im Bereich von 6 bis 18 m und insbesondere bevorzugt im Bereich von 10 bis 14 m aufweist. Die Anzahl der inneren Rohre des Reaktors liegt bevorzugt im Bereich von 10 bis 10.000, weiter bevorzugt im Bereich von 100 bis 7.500 und insbesondere bevorzugt im Bereich von 3.000 bis 6.500 oder von 3.000 bis 6.000. Die Querschnittsfläche der inneren Rohre liegt bevorzugt im Bereich von 0,3 bis 100 cm², weiter bevorzugt im Bereich von 3 bis 50 cm² und insbesondere bevorzugt im Bereich von 5,7 bis 27 cm².

Die Selektivität dieser Umsetzung in Stufe (i) bezüglich Hydroperoxid liegt bevorzugt im Bereich von 80 bis 99 %, weiter bevorzugt im Bereich von 90 bis 98 % und insbesondere bevorzugt im Bereich von 92 bis 97 %.

In Stufe (iii) wird das Verfahren bei Temperaturen bevorzugt im Bereich von 15 bis 80 °C, weiter bevorzugt im Bereich von 20 bis 70 °C und insbesondere bevorzugt im Bereich von 25 bis 60 °C durchgeführt.

Dabei wird ein Druck gewählt, der bevorzugt im Bereich von 5 bis 30 bar, weiter bevorzugt im Bereich von 6 bis 20 bar und insbesondere bevorzugt im Bereich von 8 bis 15 bar liegt.

Als Reaktor wird beispielsweise ein erfindungsgemäßer Rohrbündelreaktor eingesetzt, der bevorzugt eine Länge im Bereich von 5 bis 20 m, weiter bevorzugt im Bereich von 6 bis 18 m und insbesondere bevorzugt im Bereich von 10 bis 14 m aufweist. Die Anzahl der inneren Rohre des Reaktors liegt bevorzugt im Bereich von 10 bis 10.000, weiter bevorzugt im Bereich von 100 bis 7.500 und insbesondere bevorzugt im Bereich von 3.000 bis 6.500 oder von 3.000 bis 6.000. Die Querschnittsfläche der inneren Rohre liegt bevorzugt im Bereich von 0,3 bis 100 cm², weiter bevorzugt im Bereich von 3 bis 50 cm² und insbesondere bevorzugt im Bereich von 5,7 bis 27 cm².

Besonders bevorzugt wird in Stufe (iii) ein Schachtreaktor, weiter bevorzugt ein kontinuierlich betriebener Schachtreaktor und insbesondere bevorzugt ein kontinuierlich betriebener, isothermer Schachtreaktor eingesetzt.

Die Selektivität dieser Umsetzung in Stufe (iii) bezüglich Hydroperoxid liegt bevorzugt im Bereich von 64 bis 99 %, weiter bevorzugt im Bereich von 72 bis 90 % und insbesondere bevorzugt im Bereich von 75 bis 87 %.

Die Selektivität des Gesamtverfahrens bezüglich Hydroperoxid liegt bevorzugt im Bereich von 78 bis 99 %, weiter bevorzugt im Bereich von 88 bis 97 % und insbesondere bevorzugt im Bereich von 90 bis 96 %.

Dabei liegt der Gesamthydroperoxidumsatz bevorzugt bei mindestens 99,5 %, weiter bevorzugt bei mindestens 99,6 %, weiter bevorzugt bei mindestens 99,7 % und insbesondere bevorzugt bei mindestens 99,8 %.

Im Vergleich zu den aus dem Stand der Technik bekannten zweistufigen Verfahren zur Herstellung von Propylenoxid zeichnet sich das erfindungsgemäße Verfahren unter anderem dadurch aus, dass eine deutliche Selektivitätssteigeung erzielt wird, wobei die Selektivität im erfindungsgemäßen Verfahren im allgemeinen um mindestens 1 %, bevorzugt um mindestens 1,5 % höher ist als die aus dem Stand der Technik bekannten Selektivitäten.

Demgemäß betrifft die vorliegende Erfindung ein wie oben beschriebenes Verfahren, das dadurch gekennzeichnet ist, dass die Selektivität der Umsetzung im Bereich von 90 bis 96 %, bezogen auf Hydroperoxid, liegt.

Ganz allgemein betrifft daher die vorliegende Erfindung auch die Verwendung des erfindungsgemäßen Rohrbündelreaktors zur Selektivitätssteigerung bei der kontinuierlichen Herstellung einer chemischen Verbindung, insbesondere eines Epoxids aus einem Olefin und einem Hydroperoxid, weiter bevorzugt von Propylenoxid aus Propen und Wasserstoffperoxid und insbesondere bevorzugt von Propylenoxid aus Propen und Wasserstoffperoxid in Anwesenheit eines Titanzeolithkatalysators in Methanol als Lösungsmittel.

Wie bereits obenstehend allgemein beschrieben, kann der erfindungsgemäße Rohrbündelreaktor als Festbettreaktor mindestens zwei verschiedene Festbettkatalysatoren wie beispielsweise bevorzugt zwei verschiedene zeolithische Katalysatoren enthalten. Demgemäß beschreibt die vorliegende Erfindung insbesondere ein wie oben beschriebenes Verfahren zur kontinuierlichen Herstellung eines Epoxids in mindestens einem wie oben beschriebenen Reaktor unter Verwendung von mindestens zwei voneinander verschiedenen Zeolith-Katalysatoren, das dadurch gekennzeichnet ist, dass mindestens zwei der voneinander verschiedenen Zeolith-Katalysatoren räumlich voneinander getrennt eingesetzt werden. Insbesondere bevorzugt sind die mindestens zwei voneinander verschiedenen Zeolith-Katalysatoren Titanzeolith-Katalysatoren, die sich beispielsweise im Titangehalt oder in der Zeolithstruktur oder sowohl im Titangehalt als auch der Zeolithstruktur unterscheiden. Weiter bevorzugt sind die beiden verschiedenen Katalysatoren ein Titanzeolithkatalysator vom Kristallstrukturtyp MWW und ein Titanzeolithkatalysator vom Kristallstrukturtyp MFI.

Der Begriff "räumlich voneinander getrennt", wie er im Rahmen der vorliegenden Erfindung verwendet wird, bezeichnet Ausführungsformen, bei denen die Vorrichtung, in der die Umsetzung durchgeführt wird, mindestens zwei Kompartimente aufweist, wobei eines der Kompartimente einen Zeolith-Katalysator enthält und mindestens ein anderes Kompartiment mindestens einen weiteren Zeolith-Katalysator enthält, der sich von dem im ersten Kompartiment enthaltenen Zeolith-Katalysatoren unterscheidet. Eine solche Kompartimentierung wird bevorzugt in einem einzigen Reaktor realisiert werden, wobei wiederum verschiedene Ausführungsformen der Kompartimentierung möglich sind. So kann die Kompartimentierung in dem Reaktor beispielsweise derart erreicht werden, dass zwei oder mehr unterschiedliche Zonen des Reaktors mit jeweils unterschiedlichen Zeolith-Katalysatoren ausgestattet werden. Dabei können die unterschiedlichen Zonen des Reaktors zur räumlichen Trennung der unterschiedlichen Zeolith-Katalysatoren durch jeweils mindestens eine mechanische Trennvorrichtung voneinander getrennt sein. Zwischen zwei Zonen können demgemäß eine oder mehr gleiche oder voneinander verschiedene mechanische Trennvorrichtungen vorgesehen werden. Bei drei oder mehr Zonen können zur Trennung der verschiedenen Zonen jeweils die gleichen oder jeweils voneinander verschiedene Trennvorrichtungen vorgesehen werden. Die erfindungsgemäße Kompartimentierung in dem einzigen Reaktor kann auch ohne zusätzliche mechanische Trennvorrichtung realisiert werden. Dies ist beispielsweise durch eine spezielle Ausgestaltung der Innenwand oder der Innenwände des Reaktors möglich, die beispielsweise voneinander beabstandete Mulden, Ausnehmungen oder ähnliche Ausgestaltungen aufweisen, in die die voneinander verschiedenen Katalysatoren aufgenommen werden. Bevorzugt wird die Kompartimentierung dadurch erreicht, dass die einzelnen Kompartimente mit den unterschiedlichen Zeolith-Katalysatoren direkt aneinandergrenzen, ohne dass die unterschiedlichen Zeolith-Katalysatoren voneinander beabstandet sind. So ist es möglich, den Reaktor in einer ersten Zone mit einem ersten Zeolith-Katalysator und in einer direkt angrenzenden zweiten Zone mit einem zweiten Zeolith-Katalysator, der sich vom ersten Zeolith-Katalysator unterscheidet, auszustatten, wobei die beiden Katalysatorzonen eine oder mehrere gemeinsame Grenzflächen aufweisen. An der Grenzfläche zwischen den beiden Zonen kann eine Durchmischung der beiden unterschiedlichen Zeolith-Katalysatoren stattfinden, solange gewährleistet ist, dass über die beiden Zonen hinweg eine Inhomogenität der Zeolith-Katalysatorverteilung vorliegt. Gemäß einer besonders bevorzugten Ausführungsform wird dies beispielsweise durch eine strukturierte Schüttung verschiedener Katalysatoren erreicht. Eine erste Zone des Reaktors wird dabei durch Schüttung mit einem ersten Zeolith-Katalysator ausgestattet, wodurch das erste Katalysator-Kompartiment hergestellt wird. Anschließend wird eine zweite Zone des Reaktors durch Aufschütten des zweiten, vom ersten verschiedenen ZeolithKatalysators auf das erste Kompartiment unter Ausbildung des zweiten Kompartiments hergestellt. Ebenso können auch ein drittes Kompartiment oder weitere Kompartimente hinzugefügt werden, wobei im dritten oder einem weiteren Kompartiment jeweils einer der beiden ersten oder ein von den ersten beiden Katalysatoren verschiedener Zeolith-Katalysator verwendet werden kann. Diese Art der Herstellung wird im Rahmen der vorliegenden Erfindung als "strukturierte Schüttung" bezeichnet.

Diese strukturierte Schüttung bietet unter anderem im Vergleich zu herkömmlichen Verfahren, bei denen ein Reaktor mit nur einem einzigen Zeolith-Katalysator ausgestattet wird, den Vorteil, dass sich durch die gezielte Auswahl und damit Abfolge der Katalysatoren, die in verschiedenen Reaktorzonen eingesetzt werden, beispielsweise der Reaktionsumsatz positiv beeinflussen lässt. Beispielsweise bei kontinuierlicher Reaktionsführung, bei denen die Reaktionspartner Hydroperoxid und organische Verbindung durch den Reaktor geleitet werden und dabei die verschiedenen Reaktorzonen mit den unterschiedlichen Zeolith-Katalysatoren passieren, können die einzelnen Katalysatoren dem Reaktionsfortschritt angepasst werden.

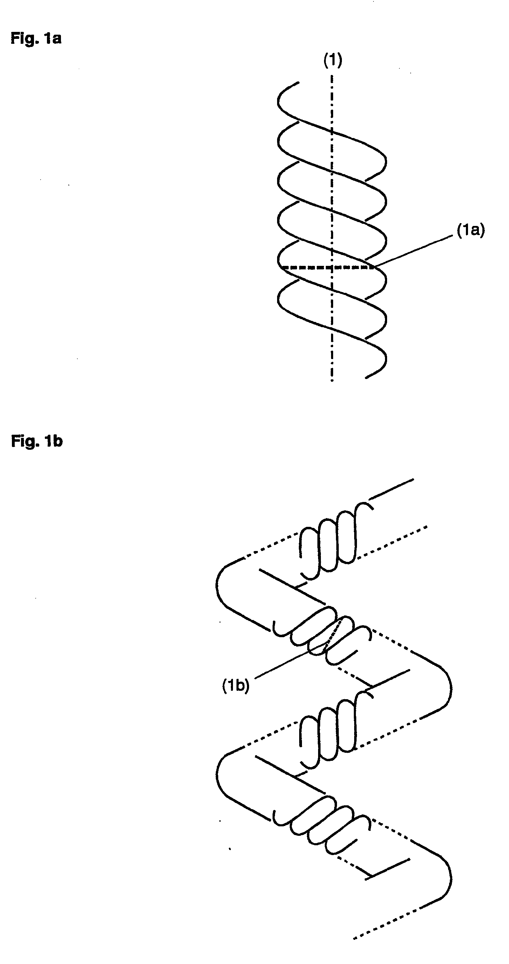

Die vorliegende Erfindung wird durch die nachfolgend beschriebenen Figuren 1 bis 4 und die folgenden Beispiele illustriert.
- Figur 1a: zeigt schematisch einen Abschnitt eines erfindungsgemäßen inneren Roh- res eines Rohrbündelreaktors, wobei der helixförmig ausgebildete Rohrab- schnitt um eine lineare Achse (1) verdrillt ist. Die Linie (1a) stellt die Projek- tion einer Querschnittsfläche des Rohres dar.
- Figur 1 b: zeigt schematisch einen Abschnitt eines erfindungsgemäßen inneren Roh- res eines Rohrbündelreaktors, wobei dieses innere Rohr abschnittsweise um lineare Achsen und abschnittsweise um nicht-lineare Achsen verdrillt ist. Die Linie (1b) stellt die Projektion einer Querschnittsfläche in einem Ab- schnitt des inneren Rohrs dar.
- Figur 2a: zeigt schematisch einen nicht-kreisförmigen Querschnitt eines erfindungs- gemäßen inneren Rohres eines Rohrbündelreaktors, der sowohl gegen- über liegende gerade Seiten als auch gegenüber liegende runde Seiten aufweist.
- Figur 2b: zeigt schematisch einen nicht-kreisförmigen Querschnitt eines erfindungs- gemäßen inneren Rohres eines Rohrbündelreaktors, der elliptisch ausge- bildet ist.
- Figur 2c: zeigt schematisch einen nicht-kreisförmigen Querschnitt eines erfindungs- gemäßen inneren Rohres eines Rohrbündelreaktors, der oval ausgebildet ist.
- Figuren 2d bis 2g: zeigen schematisch weitere nicht-kreisförmige Querschnitte eines erfindungsgemäßen inneren Rohres eines Rohrbündelreaktors.
- Figur 3: zeigt schematisch den Aufbau eines vertikal angeordneten Rohrbündelre- aktors gemäß Stand der Technik, bei dem ein Eduktstrom (2) über den un- teren Rohrboden (11) in die inneren Rohre (9) geleitet wird. Nach Durch- gang der Reaktionslösung durch die inneren Rohre verlässt der Produkt- strom (3) die inneren Rohre am oberen Rohrboden (12). Knapp oberhalb des unteren Rohrbodens wird ein Kühl- oder Heizmediumstrom (4) in den Mantelraum des Reaktors geleitet, der den Reaktor mit Hauptstromrichtung von unten nach oben durchströmt. Über Umlenkbleche (7) wird dabei ver- sucht, eine mäandernde Strömung und damit eine Queranströmung (10) der inneren Rohre durch den Kühl- oder Heizmediumstrom zu erreichen. Dabei befinden sich in Bereichen, an denen die Umlenkbleche (7) an der Mantelinnenseite befestigt sind, Totzonen (6) des Reaktors. Nach Durch- gang durch den Mantelraum des Reaktors verlässt der Kühl- oder Heizme- diumstrom knapp unterhalb des oberen Rohrbodens (12) als Ablauf (5) den Reaktor.
- Figur 4: zeigt schematisch den Aufbau eines vertikal angeordneten erfindungsge- mäßen Rohrbündelreaktors, bei dem ein Eduktstrom (2) über den unteren Rohrboden (11) in die inneren Rohre (9) geleitet wird, die, abgesehen von kurzen Bereichen knapp unterhalb des oberen Rohrbodens (12) und knapp oberhalb des unteren Rohrbodens (11) im wesentlichen vollständig helix- förmig ausgebildet sind und einen nicht-kreisförmigen Querschnitt aufwei- sen. Nach Durchgang der Reaktionslösung durch die inneren Rohre ver- lässt der Produktstrom (3) die inneren Rohre am oberen Rohrboden (12). Knapp oberhalb des unteren Rohrbodens wird ein Kühl- oder Heizmedium- strom (4) in den Mantelraum des Reaktors geleitet, der den Reaktor mit Hauptstromrichtung von unten nach oben durchströmt. Über die helixförmi- ge Ausbildung der inneren Rohre (9) wird eine turbulente Wirbelströmung (10) um die inneren Rohre (9) durch den Kühl- oder Heizmediumstrom er- reicht. Totzonen, wie sie im Reaktor gemäß Stand der Technik durch den Einbau von zahlreichen Umlenkblechen auftreten, sind nicht vorhanden. Nach Durchgang durch den Mantelraum des Reaktors verlässt der Kühl- oder Heizmediumstrom knapp unterhalb des oberen Rohrbodens (12) als Ablauf (5) den Reaktor.

### Beispiele

### Beispiel 1 : Kontinuierliche Herstellung von Propylenoxid aus Propen mit Wasserstoffperoxid

Wasserstoffperoxid wurde mit Propylen in Methanol als Lösungsmittel bei einem molaren Verhältnis Propen : Wasserstoffperoxid von 1,3 : 1 kontinuierlich in einem Hauptreaktor umgesetzt. Als Katalysator wurde ein Titanzeolith-Katalysator des Strukturtyps TS-1 als Festbettkatalysator verwendet.

Der Hauptreaktor war ein Rohrbündelreaktor mit einer Länge von 12 m und enthielt 5 helixförmige Rohre mit einem elliptischen Querschnitt mit einer Querschnittsfläche von jeweils 11,46 cm². Jedes der elliptischen Rohre wies 46 Windungen auf. Der Mantelinnendurchmesser des Reaktors betrug 220 mm. Die Katalysatorbelastung betrug 220 g_{H2O2}/(kg_{Kat}h), und der Reaktor wurde in isothermer Fahrweise betrieben. Die Kühlwassertemperatur im Hauptreaktor lag bei 35 bis 50 °C, der Druck bei etwa 20 bar. Der Umsatz bezüglich Wasserstoffperoxid lag bei etwa 90 %.

Das Reaktionsgemisch aus dem Hauptreaktor wurde einer Zwischenabtrennung zugeführt, bei der destillativ das hergestellte Propylenoxid und nicht-umgesetztes Propen abgetrennt wurden. Das Lösungsmittel sowie das im Hauptreaktor nicht umgesetzte Wasserstoffperoxid wurden in den Nachreaktor geleitet.

In einem Nachreaktor, einem adiabatisch betriebenen Schachtreaktor mit einem Durchmesser von 150 mm und einer Länge von 5 m wurde nicht-umgesetztes Wasserstoffperoxid des Hauptreaktors mit Propylen in einem molaren Verhältnis von 1: 1,3 umgesetzt. Als Katalysator wurde der im Hauptreaktor verwendete Katalysatortyp eingesetzt. Die Katalysatorbelastung im Nachreaktor betrug 55 gH_{2O2}/(kg_{Kat}h). Die Zulauftemperatur im Nachreaktor lag bei 26 bis 28 °C, der Druck bei etwa 10 bar.

Die Gesamtausbeute an Propylenoxid bezüglich Wasserstoffperoxid über beide Reaktoren lag bei 93,7 bis 94 %.

### Vergleichsbeispiel : Kontinuierliche Herstellung von Propylenoxid aus Propen mit Wasserstoffperoxid

Wasserstoffperoxid wurde mit Propylen in Methanol als Lösungsmittel bei einem molaren Verhältnis Propen : Wasserstoffperoxid von 1,3 : 1 kontinuierlich in einem Hauptreaktor umgesetzt. Als Katalysator wurde ein Titanzeolith-Katalysator des Strukturtyps TS-1 als Festbettkatalysator verwendet.

Der Hauptreaktor war ein Rohrbündelreaktor mit einer Länge von 12 m und enthielt 5 herkömmliche gerade Rohre mit einem kreisrunden Querschnitt mit einer Querschnittsfläche von jeweils 11,46 cm². Im Mantelraum waren zur Führung des Kühlmediums insgesamt 28 Umlenkbleche äquidistant angebracht. Der Mantelinnendurchmesser des Reaktors betrug 220 mm. Die Katalysatorbelastung betrug 220 g_{H2O2}/(kg_{Kat}h), und der Reaktor wurde in isothermer Fahrweise betrieben. Die Kühlwassertemperatur im Hauptreaktor lag bei 35 bis 50 °C, der Druck bei etwa 20 bar. Der Umsatz bezüglich Wasserstoffperoxid lag bei etwa 90 %.

Das Reaktionsgemisch aus dem Hauptreaktor wurde einer Zwischenabtrennung zugeführt, bei der destillativ das hergestellte Propylenoxid und nicht-umgesetztes Propen abgetrennt wurden. Das Lösungsmittel sowie das im Hauptreaktor nicht umgesetzt Wasserstoffperoxid wurden in den Nachreaktor geleitet.

In einem Nachreaktor, einem adiabatisch betriebenen Schachtreaktor mit einem Durchmesser von 150 mm und einer Länge von 5 m wurde nicht-umgesetztes Wasserstoffperoxid des Hauptreaktors mit Propylen in molaren Verhältnis 1 : 1,3 umgesetzt. Als Katalysator wurde der im Hauptreaktor verwendete Katalysatortyp eingesetzt. Die Katalysatorbelastung im Nachreaktor betrug 55 g_{H2O2}/(kg_{Kat}h). Die Zulauftemperatur im Nachreaktor lag bei 26 bis 28 °C, der Druck bei etwa 10 bar.

Die Ausbeute an Propylenoxid bezüglich Wasserstoffperoxid über beide Reaktoren lag bei 91,8 bis 92 %.

### Bezugszeichenliste

In den Figuren 1a und 1b bezeichnet
   (1) die lineare Achse, um die das innere Rohr verdrillt ist,
   (1a) die Projektion der Querschnittsfläche, und
   (1b) die Projektion einer Querschnittsfläche in einem Rohrabschnitt.
In Figur 3 bezeichnet
   (2) den Eduktstrom,
   (3) den Produktstrom,
   (4) den einfließenden Strom des Kühl- bzw. Heizmediums,
   (5) den ablaufenden Strom des Kühl- bzw. Heizmediums,
   (6) Totzonen im Reaktor,
   (7) Umlenkbleche,
   (8) den Mantel,
   (9) innere Rohre,
   (10) die mäandernde Strömung des Kühl- bzw. Heizmediums durch den Reaktor,
   (11) den unteren Rohrboden und
   (12) den oberen Rohrboden.
In Figur 4 bezeichnet
   (2) den Eduktstrom,
   (3) den Produktstrom,
   (4) den einfließenden Strom des Kühl- bzw. Heizmediums,
   (5) den ablaufenden Strom des Kühl- bzw. Heizmediums,
   (8) den Mantel,
   (9) innere Rohre,
   (10) die turbulente Strömung des Kühl- bzw. Heizmediums um die Rohre im Reaktormantelraum,
   (11) den unteren Rohrboden und
   (12) den oberen Rohrboden.

## Patentansprüche

1. Verfahren zur kontinuierlichen Herstellung einer chemischen Verbindung in mindestens einem Reaktor, wobei mindestens einer der Reaktoren ein Rohrbündelreaktor ist, der einen Mantel und mehrere in dem Mantel angeordnete innere Rohre aufweist, **dadurch gekennzeichnet, dass** mindestens eines der inneren Rohre in dem Bereich, in dem es von dem Mantel umgeben ist, zumindest teilweise einen nicht-kreisförmigen Querschnitt aufweist und helixförmig ausgebildet ist.

2. Verfahren nach Anspruch 1, **dadurch gekennzeichnet, dass** der nicht-kreisförmige Querschnitt sowohl gegenüber liegende gerade Seiten als auch gegenüber liegende runde Seiten aufweist oder die Form eines Ovals oder die Form einer Ellipse aufweist.

3. Verfahren nach Anspruch 1 oder 2, **dadurch gekennzeichnet, dass** die Helix in dem von dem Mantel umgebenen Bereich 1 bis 2000 vollständige Windungen aufweist.

4. Verfahren nach einem der Ansprüche 1 bis 3, **dadurch gekennzeichnet, dass** in dem Mantel 10 bis 10.000 innere Rohre mit nicht-kreisförmigem Querschnitt in helixförmiger Ausbildung angeordnet sind.

5. Verfahren nach einem der Ansprüche 1 bis 4, **dadurch gekennzeichnet, dass** in dem Reaktor ein Olefin in Anwesenheit mindestens eines Zeolithkatalysators mit einem Hydroperoxid zu einem Epoxid umgesetzt wird.

6. Verfahren nach Anspruch 5, umfassend die Stufen (i) bis (iii)
(i) Umsetzung des Olefins mit Hydroperoxid unter Erhalt einer Mischung, umfassend Epoxid, nicht-umgesetztes Olefin und nicht-umgesetztes Hydroperoxid,
(ii) Abtrennung des Epoxids und des nicht-umgesetzten Olefins aus der aus Stufe (i) resultierenden Mischung unter Erhalt einer Mischung, enthaltend nicht-umgesetztes Hydroperoxid,
(iii) Umsetzung der Mischung, enthaltend nicht-umgesetztes Hydroperoxid, mit Olefin,
**dadurch gekennzeichnet, dass** in mindestens einer der Stufen (i) und (iii) mindestens ein wie in den Ansprüchen 1 bis 4 definierter Rohrbündelreaktor zur Umsetzung des Olefins eingesetzt wird.

7. Verfahren nach Anspruch 6, wobei in Stufe (i) mindestens zwei parallel geschaltete isotherme, wie in den Ansprüchen 1 bis 4 definierte Rohrbündelreaktoren eingesetzt werden und in Stufe (iii) mindestens ein adiabatischer Schachtreaktor eingesetzt wird, **dadurch gekennzeichnet, dass** die Gesamtselektivität der Umsetzung im Bereich von 90 bis 96 %, bezogen auf Hydroperoxid, liegt und der Gesamthydroperoxidumsatz mindestens 99,5 % beträgt.

8. Verfahren nach einem der Ansprüche 5 bis 7, **dadurch gekennzeichnet, dass** als Olefin Propen, als Hydroperoxid Wasserstoffperoxid und als Katalysator ein Titanzeolithkatalysator eingesetzt wird.

9. Verfahren nach Anspruch 8, **dadurch gekennzeichnet, dass** der Titanzeolithkatalysator die Struktur TS-1 aufweist und als Lösungsmittel Methanol eingesetzt wird.

10. Rohrbündelreaktor zur kontinuierlichen Herstellung einer chemischen Verbindung, umfassend einen Mantel und mehrere in dem Mantel angeordnete innere Rohre mit einem nicht-kreisförmigen Querschnitt, **dadurch gekennzeichnet, dass** mindestens eines der inneren Rohre mit dem nicht-kreisförmigen Querschnitt in dem Bereich, in dem es von dem Mantel umgeben ist, zumindest teilweise helixförmig ausgebildet ist.

11. Rohrbündelreaktor nach Anspruch 10, **dadurch gekennzeichnet, dass** der nicht-kreisförmige Querschnitt sowohl gegenüber liegende gerade Seiten als auch gegenüber liegende runde Seiten aufweist oder die Form eines Ovals oder die Form einer Ellipse aufweist.

12. Rohrbündelreaktor nach Anspruch 10 oder 11, **dadurch gekennzeichnet, dass** die Helix in dem von dem Mantel umgebenen Bereich 1 bis 2000 vollständige Windungen aufweist.

13. Rohrbündelreaktor nach einem der Ansprüche 10 bis 12, **dadurch gekennzeichnet, dass** in dem Mantel 10 bis 10.000 innere Rohre mit nicht-kreisförmigem Querschnitt in helixförmiger Ausbildung angeordnet sind.

14. Rohrbündelreaktor nach einem der Ansprüche 10 bis 13, **dadurch gekennzeichnet, dass** mindestens eines der inneren Rohre in mindestens einem Rohrbereich mindestens einen Festbettkatalysator enthält.

15. Rohrbündelreaktor nach Anspruch 14, **dadurch gekennzeichnet, dass** mindestens ein Festbettkatalysator ein Titanzeolithkatalysator ist.

16. Vorrichtung zur kontinuierlichen Herstellung einer chemischen Verbindung, umfassend mindestens einen Rohrbündelreaktor gemäß einem der Ansprüche 10 bis 15.

17. Vorrichtung nach Anspruch 16, zusätzlich umfassend mindestens eine Abtrennvorrichtung.

18. Vorrichtung nach Anspruch 16 oder 17, umfassend mindestens zwei parallel verschaltete Rohrbündelreaktoren gemäß einem der Ansprüche 10 bis 15, eine diesen mindestens zwei parallel verschalteten Rohrbündelreaktoren nachgeschaltete Destillationskolonne und mindestens einen der Destillationskolonne nachgeschalteten Schachtreaktor.

19. Verwendung eines Rohrbündelreaktor gemäß einem der Ansprüche 10 bis 15 zur Selektivitätsverbesserung bei der Herstellung einer chemischen Verbindung.

## Claims

1. A process for the continuous preparation of a chemical compound in at least one reactor, where at least one of the reactors is a shell-and-tube reactor which has a shell and a plurality of internal tubes located within-the shell, wherein at least one of the internal tubes has, at least in part, a noncircular cross section and a helical configuration in the region in which it is surrounded by the shell.

2. The process according to claim 1, wherein the noncircular cross section has both mutually opposite straight sides and mutually opposite round sides or has the shape of an oval or the shape of an ellipse.

3. The process according to claim 1 or 2, wherein the helix has from 1 to 2000 complete turns in the region surrounded by the shell.

4. The process according to any of claims 1 to 3, wherein from 10 to 10 000 internal tubes having a noncircular cross section are located within the shell in a helical configuration.

5. The process according to any of claims 1 to 4, wherein an olefin is reacted with a hydroperoxide in the presence of at least one zeolite catalyst to form an epoxide in the reactor.

6. The process according to claim 5, which comprises the stages (i) to (iii)
(i) reaction of the olefin with hydroperoxide to give a mixture comprising epoxide, unreacted olefin and unreacted hydroperoxide,
(ii) separation of the epoxide and the unreacted olefin from the mixture resulting from stage (i) to give a mixture comprising unreacted hydroperoxide,
(iii) reaction of the mixture comprising unreacted hydroperoxide with olefin,
wherein at least one shell-and-tube reactor as defined in claims 1 to 4 is used for the reaction of the olefin in at least one of the stages (i) and (iii).

7. The process according to claim 6, wherein at least two isothermal shell-and-tube reactors as defined in claims 1 to 4 connected in parallel are used in stage (i) and at least one adiabatic shaft reactor is used in stage (iii), wherein the overall selectivity of the reaction is in the range from 90 to 96%, based on hydroperoxide, and the total hydroperoxide conversion is at least 99.5%.

8. The process according to any of claims 5 to 7, wherein propene is used as olefin, hydrogen peroxide is used as hydroperoxide and a titanium zeolite catalyst is used as catalyst.

9. The process according to claim 8, wherein the titanium zeolite catalyst has the TS-1 structure and methanol is used as solvent.

10. A shell-and-tube reactor for the continuous preparation of a chemical compound, which comprises a shell and a plurality of noncircular cross-section internal tubes located within the shell, wherein at least one of the internal tubes having the noncircular cross section is at least partly helical in the region in which it is surrounded by the shell.

11. The shell-and-tube reactor according to claim 10, wherein the noncircular cross section has both mutually opposite straight sides and mutually opposite round sides or has the shape of an oval or the shape of an ellipse.

12. The shell-and-tube reactor according to claim 10 or 11, wherein the helix has from 1 to 2000 complete turns in the region surrounded by the shell.

13. The shell-and-tube reactor according to any of claims 10 to 12, wherein from 10 to 10 000 internal tubes having a noncircular cross section are located within the shell in a helical configuration.

14. The shell-and-tube reactor according to any of claims 10 to 13, wherein at least one region of at least one of the internal tubes contains at least one fixed-bed catalyst.

15. The shell-and-tube reactor according to claim 14, wherein at least one fixed-bed catalyst is a titanium zeolite catalyst.

16. An apparatus for the continuous preparation of a chemical compound, which comprises at least one shell-and-tube reactor according to any of claims 10 to 15.

17. The apparatus according to claim 16 which further comprises at least one separation apparatus.

18. The apparatus according to claim 16 or 17, which comprises at least two shell-and-tube reactors according to any of claims 10 to 15 connected in parallel, a distillation column located downstream of these at least two shell-and-tube reactors connected in parallel and at least one shaft reactor located downstream of the distillation column.

19. The use of a shell-and-tube reactor according to any of claims 10 to 15 for improving the selectivity in the preparation of a chemical compound.

## Revendications

1. Procédé pour la préparation en continu d'un composé chimique dans au moins un réacteur, où au moins un des réacteurs est un réacteur à faisceau tubulaire, qui présente une enveloppe et plusieurs tubes internes disposés dans l'enveloppe, **caractérisé en ce qu'**au moins un des tubes internes présente, dans la zone où il est entouré par l'enveloppe, au moins partiellement une section non circulaire et est réalisé en forme d'hélice.

2. Procédé selon la revendication 1, **caractérisé en ce que** la section non circulaire présente des côtés droits opposés ainsi que des côtés ronds opposés ou la forme d'un ovale ou la forme d'une ellipse.

3. Procédé selon la revendication 1 ou 2, **caractérisé en ce que** l'hélice présente, dans la zone entourée par l'enveloppe, 1 à 2000 spires complètes.

4. Procédé selon l'une quelconque des revendications 1 à 3, **caractérisé en ce que** 10 à 10 000 tubes internes présentant une section non circulaire sont disposés dans une formation hélicoïdale dans l'enveloppe.

5. Procédé selon l'une quelconque des revendications 1 à 4, **caractérisé en ce qu'**on transforme dans le réacteur une oléfine en présence d'au moins un catalyseur zéolithique avec un hydroperoxyde en époxyde.

6. Procédé selon la revendication 5, comprenant les étapes (i) à (iii)
(i) transformation de l'oléfine avec l'hydroperoxyde avec obtention d'un mélange contenant un époxyde, de l'oléfine non transformée et de l'hydroperoxyde non transformé,
(ii) séparation de l'époxyde et de l'oléfine non transformée du mélange obtenu dans l'étape (i) avec obtention d'un mélange contenant de l'hydroperoxyde non transformé,
(iii) transformation du mélange contentant de l'hydroperoxyde non transformé avec de l'oléfine,
**caractérisé en ce que** dans au moins une des étapes (i) et (iii) on utilise au moins un réacteur à faisceau tubulaire tel que défini dans les revendications 1 à 4 pour la transformation de l'oléfine.

7. Procédé selon la revendication 6, où on utilise, dans l'étape (i), au moins deux réacteurs à faisceau tubulaire isothermiques, disposés en parallèle, tels que définis dans les revendications 1 à 4 et dans l'étape (iii) au moins un réacteur à puits adiabatique, **caractérisé en ce que** la sélectivité totale de la transformation se situe dans la plage de 90 à 96%, par rapport à l'hydroperoxyde et la conversion totale de l'hydroperoxyde est d'au moins 99,5%.

8. Procédé selon l'une quelconque des revendications 5 à 7, **caractérisé en ce qu'**on utilise comme oléfine du propylène, comme hydroperoxyde du peroxyde d'hydrogène et comme catalyseur un catalyseur de type titane-zéolithe.

9. Procédé selon la revendication 8, **caractérisé en ce que** le catalyseur de type titane-zéolithe présente la structure TS-1 et du méthanol est utilisé comme solvant.

10. Réacteur à faisceau tubulaire pour la préparation en continu d'un composé chimique, comprenant une enveloppe et plusieurs tubes internes présentant une section non circulaire disposés dans l'enveloppe, **caractérisé en ce qu'**au moins un des tubes internes présentant la section non circulaire, dans la zone où il est entouré par l'enveloppe, est réalisé au moins partiellement en formé d'hélice.

11. Réacteur à faisceau tubulaire selon la revendication 10, **caractérisé en ce que** la section non circulaire présente des côtés droits opposés ainsi que des côtés ronds opposés ou la forme d'un ovale ou la forme d'une ellipse.

12. Réacteur à faisceau tubulaire selon la revendication 10 ou 11, **caractérisé en ce que** l'hélice présente, dans la zone entourée par l'enveloppe, 1 à 2000 spires complètes.

13. Réacteur à faisceau tubulaire selon l'une quelconque des revendications 10 à 12, **caractérisé en ce que** 10 à 10 000 tubes internes présentant une section non circulaire sont disposés dans une formation hélicoïdale dans l'enveloppe.

14. Réacteur à faisceau tubulaire selon l'une quelconque des revendications 10 à 13, **caractérisé en ce qu'**au moins un des tubes internes contient dans au moins une zone du tube au moins un catalyseur en lit fixe.

15. Réacteur à faisceau tubulaire selon la revendication 14, **caractérisé en ce qu'**au moins un catalyseur en lit fixe est un catalyseur de type titane-zéolithe.

16. Dispositif pour la préparation en continu d'un composé chimique, comprenant au moins un réacteur à faisceau tubulaire selon l'une quelconque des revendications 10 à 15.

17. Dispositif selon la revendication 16, comprenant en outre au moins un dispositif de séparation.

18. Dispositif selon la revendication 16 ou 17, comprenant au moins deux réacteurs à faisceau tubulaire disposés en parallèle selon l'une quelconque des revendications 10 à 15, une colonne de distillation disposée en aval desdits au moins deux réacteurs à faisceau tubulaire disposés en parallèle et au moins un réacteur à puits disposé en aval de la colonne de distillation.

19. Utilisation d'un réacteur à faisceau tubulaire selon l'une quelconque des revendications 10 à 15 pour améliorer la sélectivité lors de la préparation d'un composé chimique.
